# EUROPEAN PATENT SPECIFICATION

(11) **EP 4 339 639 B1**
(45) Date of publication and mention of the grant of the patent: **30.09.2026**
(21) Application number: 23195383.7
(22) Date of filing: 05.09.2023
(51) Int. Cl.: G01S 7/481

(54) **TRANSCEIVING MODULE AND LIDAR**
SENDE-/EMPFANGSMODUL UND LIDAR
MODULE D'ÉMISSION-RÉCEPTION ET LIDAR

(30) Priority: 09.09.2022 CN 202211102152; 09.09.2022 CN 202211105845
(43) Date of publication of application: 20.03.2024
(73) Proprietor: Suteng Innovation Technology Co., Ltd, Shenzhen City Guangdong 518000 (CN)
(72) Inventor: JIANG, Peng, Shenzhen City (CN)
(74) Representative: Ran, Handong

(56) References cited:
- WO-A1-2020/050959
- WO-A1-2020/205673
- US-A1- 2022 121 080

## Description

### TECHNICAL FIELD

The present application pertains to the technical field of autonomous driving, and in particular, relates to a transceiving module and LiDAR.

### BACKGROUND

LiDAR is a system that emits a laser beam to obtain characteristics of targets such as a position and a speed. The working principle of the LiDAR is to first emit detection laser beams to the target, then compare received signals reflected from the target with emitted signals, and properly process the signals to obtain relevant information of the target, for example, parameters of the target such as distance, azimuth, height, speed, posture, and even shape.

However, an existing LiDAR coaxial transceiving system using integrated optical technologies requires a free-space optical circulator, which causes low production efficiency, low integration, and high overall costs for the LiDAR; and resolution of such LiDAR depends on a scanning speed, and therefore, the resolution can be improved only to a limited extent. Relevant transmitters/receivers are disclosed in US2022/121080A1, WO2020/050959A1 and WO2020/205673A1.

### SUMMARY

The present application aims to provide a transceiving module according to claim 1, and a LiDAR according to claim 13, to resolve technical problems of high costs, and insufficient ranging capability and resolution of the LiDAR in the related art.

In an optional embodiment, the reflection structure and the transceiving assemblies are spaced apart.

In an optional embodiment, the multiple reflection slopes are staggered along a second direction, and the second direction is perpendicular to the first direction.

In an optional embodiment, the multiple reflection slopes are sequentially connected to form a combined surface.

In an optional embodiment, the transceiving assemblies and the reflection structure are disposed on a first surface of the substrate.

In an optional embodiment, an accommodating cavity is disposed on the first surface, and the reflection structure is disposed in the accommodating cavity.

In an optional embodiment, the reflection structure is fixed in the accommodating cavity.

In an optional embodiment, the transceiving module further includes an upper coating covering the first surface of the substrate and the transceiving assemblies, and the reflection structure is disposed on a second surface of the upper coating.

In an optional embodiment, the at least one receiving waveguide is on a same side or two sides of the emission waveguide.

In an optional embodiment, in a same transceiving assembly, a light outgoing surface of the emission waveguide and a light incident surface of the receiving waveguide are on a same plane; or the light incident surface of the receiving waveguide is staggered behind the light outgoing surface of the emission waveguide in the second direction.

In an optional embodiment, the emission waveguide and the at least one receiving waveguide are spaced apart along the first direction; a first reflection surface is disposed on a light outgoing side of the emission waveguide, and the first reflection surface is configured to reflect a detection beam transmitted in the emission waveguide and to direct the detection beam outwards; and a second reflection surface is disposed on a light incident side of each of the at least one receiving waveguide, and the second reflection surface is configured to receive and reflect an echo beam, so that the echo beam enters the receiving waveguide.

In an optional embodiment, the first reflection surface is formed on a light outgoing terminal of the emission waveguide, and the second reflection surface is formed on a light incident terminal of the receiving waveguide.

In an optional embodiment, the transceiving assembly includes one emission waveguide and one receiving waveguide arranged along the first direction, and a distance between the emission waveguide and the receiving waveguide is less than 2 µm.

In an optional embodiment, the first reflection surface of the emission waveguide and the second reflection surface of the receiving waveguide that belong to a same transceiving assembly are aligned in the first direction.

In an optional embodiment, a flared structure is formed on an input terminal of the receiving waveguide.

In an optional embodiment, the substrate is on a light outgoing side of the detection beam, an included angle between the first reflection surface and a first surface of the substrate is 30° to 60°, and an included angle between the second reflection surface and the first surface is 30° to 60°; or the substrate is on a side facing away from the light outgoing side of the detection beam, an included angle between the first reflection surface and the first surface is 120° to 150°, and an included angle between the second reflection surface and the first surface is 120° to 150°.

In an optional embodiment, both the first reflection surface and the second reflection surface are coated with a high-reflection film; and the quantity of transceiving assemblies is greater than or equal to 2.

According to a second aspect, a LiDAR is provided, including an emission module, a receiving module and a scanning module, and further including the transceiving module provided in the foregoing embodiments, where the emission module emits a detection beam; the detection beam enters the transceiving module and is directed by the transceiving module towards the scanning module, and the scanning module deflects the detection beam and then emits the detection beam outwards for detection; and the scanning module is also configured to receive an echo beam, deflect the echo beam and then emit the echo beam to the transceiving module, and the echo beam enters the transceiving module and enters the receiving module through the transceiving module.

In an optional embodiment, the emission module and the receiving module are located on the same transceiving chip, and the transceiving chip is coupled to the transceiving module.

Compared with the related art, a technical effect of the present application is: In the transceiving module and the LiDAR provided in the embodiments of the present application, the transceiving module includes the substrate and the multiple transceiving assemblies, where the multiple transceiving assemblies are arranged on the substrate in sequence along the first direction, each transceiving assembly includes an emission waveguide and a receiving waveguide, the emission waveguide is configured to transmit and emit the detection beam, and the receiving waveguide is configured to receive and transmit the echo beam. In a first aspect, the transceiving module provided in the embodiments of the present application is provided with multiple transceiving assemblies in the first direction, one transceiving assembly forms a detection channel, and the transceiving module is disposed so that a first direction of the transceiving module and a direction Y of the scanning module are parallel, to form multiple detection channels in the direction Y, which can effectively improve resolution of the LiDAR in the direction Y. A waveguide of each transceiving assembly directly transmits and receives a beam. The transceiving module is integrated on a planar optical waveguide chip to implement integration of receiving and emission without using a spatial optical circulator, thereby improving integration of the LiDAR. In a second aspect, in the transceiving module provided in the embodiments of the present application, the emission waveguide and the receiving waveguide are disposed on the surface of the substrate, so that the first direction of the transceiving module is parallel to the direction Y, without a need to stack multiple transceiving assemblies in a thickness direction of the planar optical waveguide chip to improve resolution in the direction Y, thereby optimizing a chip design and simplifying processing. In a third aspect, an optical path along a direction parallel to the surface of the substrate can be deflected via the reflection structure, and the multiple reflection slopes are staggered in the second direction, which can not only increase the quantity of detection channels arranged in the second direction, but also increase resolution of the LiDAR in a direction X and a vertical direction Y.

### BRIEF DESCRIPTION OF THE DRAWINGS

To explain the technical solution in embodiments in the present application more clearly, the following briefly introduces the accompanying drawings required for description in the embodiments of the present application or the related art. Obviously, the accompanying drawings in the following description are only some embodiments in the present application. A person of ordinary skill in the art may still derive other drawings from these accompanying drawings without creative efforts.
FIG. 1 is a schematic structural diagram of LiDAR according to an embodiment of the present application;
FIG. 2 is a schematic structural top view of a transceiving module and a collimating module used in an embodiment of the present application;
FIG. 3 is a schematic structural top view of a transceiving module and a collimating module used in another embodiment of the present application;
FIG. 4 is a schematic structural top view of a transceiving module and a collimating module used in another embodiment of the present application;
FIG. 5 is a schematic structural diagram of a cross section of the transceiving module and the collimating module shown in any one of FIG. 2 to FIG. 4;
FIG. 6 is a schematic diagram of a three-dimensional structure of a transceiving module used in an embodiment of the present application;
FIG. 7 is a schematic diagram of a three-dimensional structure of the substrate in FIG. 6;
FIG. 8 is a schematic diagram of a three-dimensional structure of a transceiving module used in another embodiment of the present application;
FIG. 9 is a schematic diagram of a three-dimensional structure of a transceiving module used in another embodiment of the present application;
FIG. 10 is a schematic diagram of a use status of a single transceiving assembly used in an embodiment of the present application;
FIG. 11 is a schematic structural diagram of a frequency-modulated continuous-wave LiDAR used in an embodiment of the present application;
FIG. 12 is a schematic structural diagram of a transceiving module according to another embodiment of the present application.
FIG. 13 is a schematic structural diagram of a single transceiving assembly used in an embodiment of the present application;
FIG. 14 is a schematic structural diagram of a single transceiving assembly used in another embodiment of the present application;
FIG. 15 is a schematic structural diagram of a transceiving module according to another embodiment of the present application.
FIG. 16 is a schematic structural diagram of the single transceiving assembly in FIG. 12 or FIG. 15;
FIG. 17 is a schematic diagram of an outgoing optical path of a detection beam corresponding to the transceiving assembly shown in FIG. 16;
FIG. 18 is a schematic structural diagram of a single transceiving assembly according to another embodiment of the present application; and
FIG. 19 is a schematic diagram of an outgoing optical path of a detection beam corresponding to the transceiving assembly shown in FIG. 18.

### DESCRIPTION OF THE APPLICATION

The embodiments of the present application are described in detail below. Examples of the embodiments are shown in the accompanying drawings, and the same or similar reference signs indicate the same or similar elements or elements with the same or similar functions. The embodiments described below with reference to the drawings are exemplary and intended to explain the present application, but cannot be construed as a limitation on the present application.

In the description of the present application, it should be understood that azimuth or position relationships indicated by terms such as "length", "width", "above", "under", "front", "rear", "left", "right", "vertical", "horizontal", "top", "bottom", "inner", and "outer" are based on the azimuth or position relationships shown in the accompanying drawings, are merely intended to describe the present application and simplify the descriptions, but are not intended to indicate or imply that the specified device or element shall have specific azimuth or be formed and operated in specific azimuth, and therefore cannot be understood as a limitation on the present application.

In addition, the terms such as "first" and "second" are merely intended for a purpose of description, and shall not be understood as an indication or implication of relative importance or implicit indication of a quantity of indicated technical features. Therefore, a feature with a determiner such as "first" or "second" may expressly or implicitly include one or more features. In the description of the present application, "a plurality of" means two or more, unless otherwise specifically defined.

In the present application, unless otherwise clearly specified and limited, terms such as "mounting", "connection", "link", and "fixing" should be understood in a general sense. For example, these terms may be a fixed connection, a detachable connection, or an integrated connection; or may alternatively be a mechanical connection or an electrical connection; or may be a direct connection, an indirect connection via an intermediate medium, or an internal link of two elements or an interaction of two elements. A person of ordinary skill in the art may understand specific meanings of the foregoing terms in the present application according to a specific situation.

To make the objectives, technical solutions, and advantages of the present application more comprehensible, the following further describes the present application in detail with reference to accompanying drawings and embodiments.

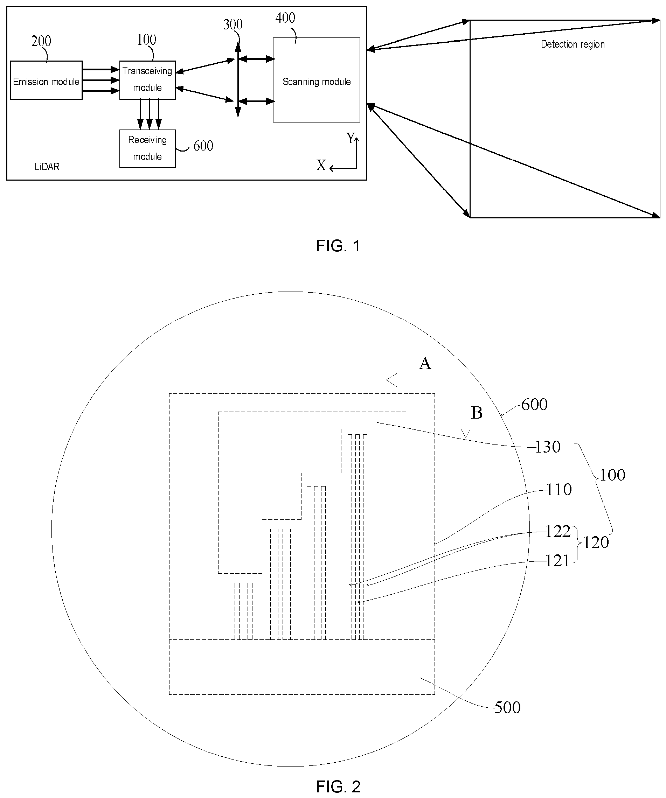

As shown in FIG. 1, LiDAR includes an emission module 200, a transceiving module 100, a scanning module 400, and a receiving module 600. The emission module 200 is configured to emit and couple detection beams to enter the transceiving module 100. The transceiving module 100 emits the detection beam to the scanning module 400, the detection beam is deflected by the scanning module 400 and then emitted outwards to a to-be-detected region. Then, echo beams returned after being reflected by an object in the to-be-detected region are received by the scanning module 400, and the scanning module 400 deflects the echo beams and then emits the echo beams to the transceiving module 100. The echo beams are coupled to enter the transceiving module 100. The transceiving module 100 emits the echo beams to the receiving module 600, and the receiving module 600 performs calculation according to the received echo beams to obtain a detection result.

A ranging principle applicable to the foregoing LiDAR can be Time of Flight (ToF) or Frequency Modulated Continuous Wave (FMCW). The scanning module 400 deflects a beam in a direction X (horizontal direction) and a direction Y (vertical direction), so that the LiDAR scans in the horizontal direction and the vertical direction.

Referring to FIG. 2 to FIG. 5, an embodiment of the present application provides a transceiving module 100. The transceiving module 100 includes a substrate 110 and multiple transceiving assemblies 120. The multiple transceiving assemblies 120 are arranged on the substrate 110 in sequence along a first direction A. The foregoing first direction A may be a length direction, a width direction, or another direction of the substrate 110, which may be manually set specifically based on a use need. Each transceiving assembly 120 includes an emission waveguide 121 and a receiving waveguide 122. The emission waveguide 121 is configured to transmit and emit a detection beam. The receiving waveguide 122 is configured to receive and transmit an echo beam.

As shown in FIG. 2, the transceiving module 100 is provided with multiple transceiving assemblies 120 in a first direction A, one transceiving assembly 120 forms one detection channel, and the first direction A is set to be parallel to a scanning direction Y of the scanning module 400, so that the transceiving module 100 forms multiple detection channels in the direction Y.

During detection, as shown in FIG. 1, the emission module 200 emits detection beams, and the detection beams are separately coupled to enter the multiple detection channels and are emitted to the scanning module 400 through the multiple detection channels. The detection beams emitted through the multiple detection channels of the transceiving module 100 are arranged in sequence along the direction Y, and an outgoing direction of the detection beams is the direction X. The scanning module 400 deflects the detection beams and then emits the detection beams outwards for detection. An echo beam is returned after a detection beam is reflected by a target object. After the scanning module 400 receives and deflects the echo beams, the echo beams are coupled to enter the multiple detection channels of the transceiving module 100, and then the echo beams are transmitted through the multiple detection channels and enter the receiving module 600.

According to the first aspect, the transceiving module 100 provided in the embodiments of the present application is provided with the multiple transceiving assemblies 120 in the first direction, one transceiving assembly 120 forms one detection channel, and a first direction is set to be parallel to a direction Y of the scanning module 400, to form multiple detection channels in the direction Y, which can effectively improve resolution of the LiDAR in the direction Y. A waveguide of each transceiving assembly 120 directly transmits and receives a beam. The transceiving module 100 is integrated on a planar optical waveguide chip to implement integration of receiving and emission without using a spatial optical circulator, thereby improving integration of the LiDAR. According to the second aspect, in the transceiving module 100 provided in the embodiments of the present application, the emission waveguide 121 and the receiving waveguide 122 can be disposed on the surface of the substrate 110, so that the first direction of the transceiving module 100 is set to be parallel to the direction Y, to form the multiple detection channels in the direction Y, without a need to stack multiple transceiving assemblies 120 in a thickness direction of the planar optical waveguide chip, thereby optimizing a chip design and simplifying processing.

As shown in FIG. 2 to FIG. 4, the transceiving module 100 further includes a reflection structure 130 formed on a first side of the transceiving assembly 120. The first side is a side on which the transceiving assemblies 120 emit the detection beams and receive the echo beams. The reflection structure 130 includes a first reflection region corresponding to the emission waveguide 121, and a second reflection region corresponding to the receiving waveguide 122. The first reflection region is configured to reflect the detection beam emitted by the emission waveguide 121, to direct the detection beam outwards. The second reflection region is configured to receive and reflect the echo beam, so that the echo beam enters the receiving waveguide 122. When the detection beam is emitted outwards through the emission waveguide 121, the detection beam forms a specific divergence angle, and a region in which the detection beam is incident on the reflection structure 130 and forms a light spot is the first reflection region. After the detection beam is scattered and reflected by an object in the to-be-detected region, the beam diffuses, a region in which the echo beam is incident on the reflection structure 130 and forms a light spot is the second reflection region, and the second reflection region has a large area. In addition, because the emission waveguide 121 and the receiving waveguide 122 of the transceiving assembly 120 are relatively close, the first reflection region may overlap with the second reflection region.

In this embodiment, the emission waveguides 121, the receiving waveguides 122 and the reflection structure 130 are disposed in the transceiving module 100. The emission waveguide 121 corresponds to the first reflection region, and the receiving waveguide 122 corresponds to the second reflection region. Optical paths of detection beams transmitted in the emission waveguides 121 and echo beams transmitted in the receiving waveguides 122 are deflected after reflection on the reflection structure 130, and therefore, a transmission direction of a detection beam originally transmitted in a direction parallel to the surface of the substrate 110 is changed to a direction perpendicular to the surface of the substrate 110, or a direction forming another angle with the surface of the substrate 110; in addition, an echo beam in the direction perpendicular to the surface of the substrate 110 or in a direction forming another angle with the surface of the substrate 110 can enter the receiving waveguide 122.

Based on the transceiving module 100 provided in this embodiment, multiple optical paths that are used for emission and reception and that pass through the transceiving module 100 can be staggered on both a plane parallel to the surface of the substrate 110 and a plane perpendicular to the surface of the substrate 110 or a plane forming a specific angle with the surface of the substrate 110, which effectively resolves a problem that optical paths cannot be staggered in two directions in a planar waveguide chip using a one-dimensional waveguide array. In the LiDAR using the foregoing transceiving module 100, optical paths of the multiple transceiving modules 100 are separately staggered in two directions, and the to-be-detected region is scanned after the optical paths pass through the scanning module, which can increase resolution in the direction X and the direction Y simultaneously.

In an optional embodiment, reflection structures are disposed on terminal surfaces of the emission waveguide and the receiving waveguide. A surface of a terminal of the emission waveguide that emits the detection beam is processed into an inclined plane, a reflection coating, a reflection film, or the like is disposed on the inclined plane to form a reflection surface, and the first reflection region is on a reflection surface of the emission waveguide. Likewise, for a second reflection region, a surface of a terminal of the receiving waveguide that receives the echo beam is processed into an inclined plane, a reflection coating, a reflection film, or the like is disposed on the inclined plane to form a reflection surface, and the second reflection region is on a reflection surface of the receiving waveguide. Included angles between the substrate and the inclined planes of the terminal surface of the emission waveguide and the terminal surface of the receiving waveguide satisfy a preset angle, for example, 30° to 60°. An outgoing direction of the detection beam reflected by the inclined plane of the emission waveguide forms an included angle 1 with the surface of the substrate 110. In addition, an echo beam in an incident direction forming an included angle 2 (which may be approximately equal to the included angle 1) with the surface of the substrate 110 enters the receiving waveguide after being reflected by the inclined plane of the receiving waveguide. The included angle 1 mentioned herein can be 90°, an acute angle relative to the surface of the substrate 110, or an obtuse angle relative to the surface of the substrate 110, which can be specifically designed based on a light emission requirement. The angle 2 is similar to the angle 1. Details are not described herein again.

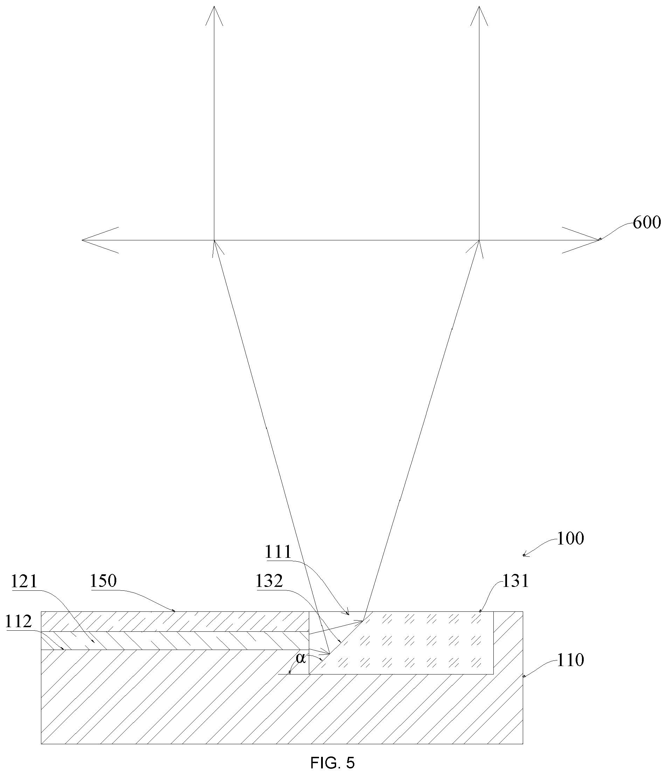

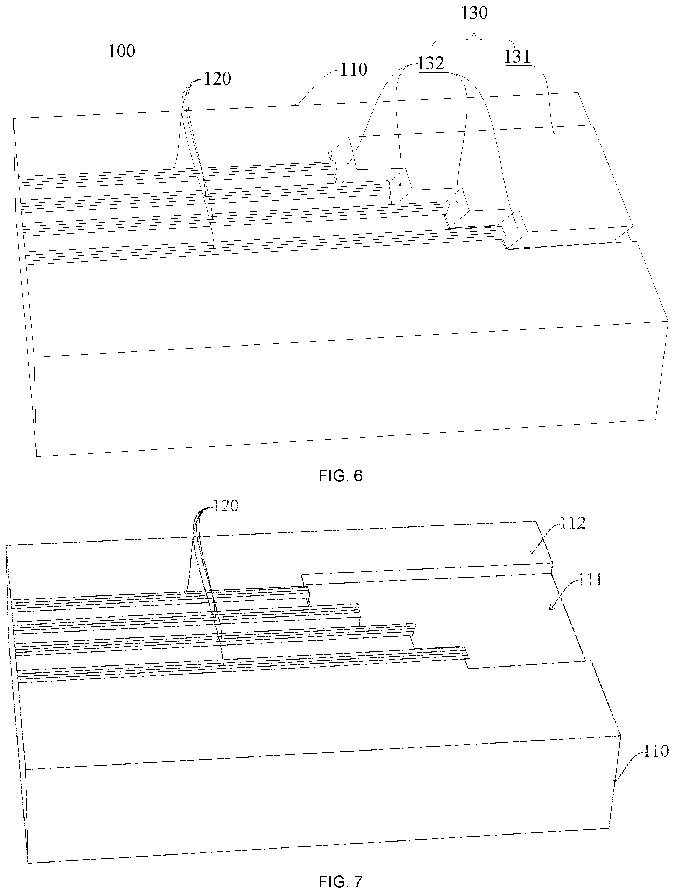

In an embodiment, as shown in FIG. 5, the reflection structure of the transceiving module may further include multiple reflection slopes 132, and the reflection slopes 132 and the transceiving assemblies are spaced apart. As shown in FIG. 6, the quantity of reflection slopes 132 is the same as the quantity of transceiving assemblies 120. Each reflection slope 132 includes a first reflection region and a second reflection region. The detection beam emitted by the emission waveguide 121 is deflected on the first reflection region of the reflection slope. The echo beam enters the receiving waveguide 122 after being deflected on the second reflection region of the reflection slope.

The first reflection region and the second reflection region can be designed based on an optical setting need. For example, for the detection beam and the echo beam, because displacement of the scanning module during flight of photons causes a walkoff effect of a receiving angle, optical paths of the detection beam and the echo beam may not completely overlap with each other. The first reflection region and the second reflection region may not be on the same reflection slope, and included angles between the first reflection region, the second reflection region and the surface of the substrate are adjusted, or distances between the first reflection region, the second reflection region and the waveguide are adjusted, so that the optical path is aligned with the corresponding reflection region, thereby improving emission efficiency and reception efficiency. Therefore, the reflection slope in which the first reflection region is located and the reflection slope in which the second reflection region is located may also be at different tilt angles. To facilitate processing and simplify a design, the first reflection region and the second reflection region are arranged on the same reflection slope. As shown in FIG. 6, each reflection slope 132 includes a first reflection region and a second reflection region that partially overlap with each other.

Optionally, the reflection slope 132 can be an independent part, and is disposed on the substrate 110. For example, the substrate 110 is provided with a slope structure forming the reflection slope 132, and a reflection coating, a reflection film, or the like is disposed on the slope structure to form the reflection slope 132, or a reflector is fixed on the slope structure, and the reflector is the reflection slope 132, which can effectively reduce processing difficulty of the reflection structure, so that the reflection structure and the transceiving assembly can be maintained independently without affecting each other.

Optionally, the reflection slope 132 can be alternatively directly disposed on the substrate 110. For example, the surface of the substrate 110 is directly provided with a slope structure forming the reflection slope 132, and a reflection coating, a reflection film, or the like is disposed on the slope structure to form the reflection slope 132, or a reflector is fixed on the slope structure, and the reflector is the reflection slope 132, which simplifies a manufacturing step of the reflection structure and production.

In an embodiment, the multiple reflection slopes are staggered along a second direction B, and the second direction is perpendicular to the first direction, which can increase the quantity of channels in the second direction B. When the transceiving assembly is disposed vertically and the first direction A of the transceiving assembly is parallel to the direction Y, the second direction B is parallel to the direction X, after deflection of the corresponding reflection slope, optical paths for channels are staggered in the direction X, and therefore, the quantity of detection channels of the LiDAR in the direction X can be effectively increased, that is, resolution of the corresponding LiDAR in the direction X is increased, which improves detection accuracy of the LiDAR and can also reduce an adverse effect of the walkoff effect of the receiving angle in the direction X on detection of the LiDAR, thereby improving a ranging capability of the corresponding LiDAR.

Taking the first reflection slope at the outermost edge as a reference, a staggered distance between the second reflection slope and the reference along the second direction B is d₂, and by analogy, a staggered distance between an N^{th} reflection slope and the reference along the second direction B is d_{N}. The multiple reflection slopes may be sequentially staggered along the second direction B, that is, d₂ to d_{N} increase sequentially. The staggered distances between the multiple reflection slopes along the second direction B may be in an ascending order first and then a descending order (or in a descending order first and then an ascending order), or may be set randomly. Provided that d₂ to d_{N} are not all equal, the optical paths for multiple channels can be staggered in the direction X after deflected by the corresponding reflection slopes, thereby improving the resolution of the LiDAR in the direction X.

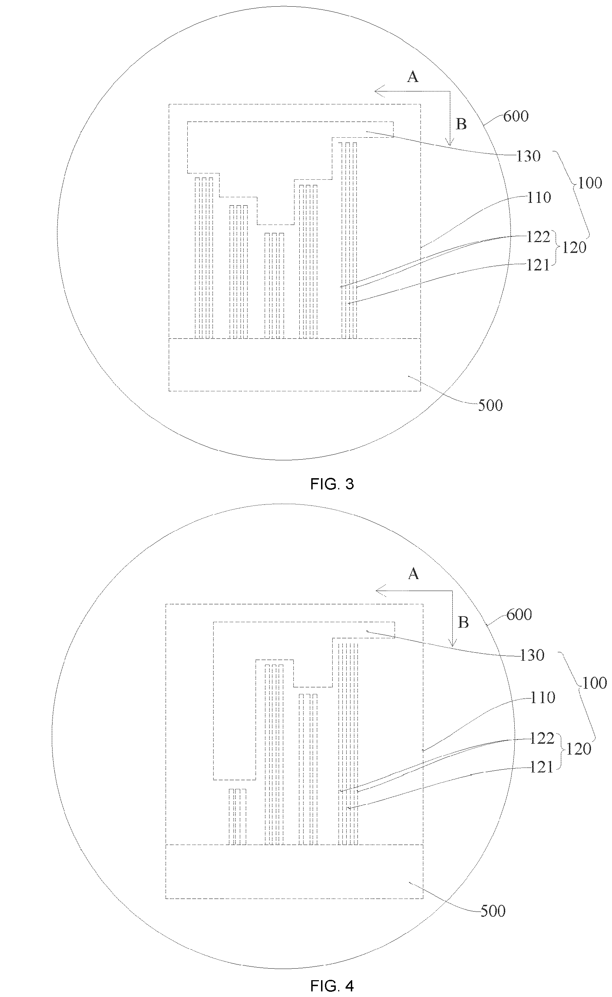

The multiple reflection slopes 132 included in the reflection structure may be separate structures. For example, each transceiving assembly is correspondingly provided with an independent slope structure. The multiple reflection slopes may also be sequentially connected to form a combined surface. Corresponding positions and the set quantity of the multiple reflection slopes correspond to those of the transceiving assemblies. To facilitate processing, the multiple reflection slopes can be sequentially connected through a transition surface, and the reflection structure is an integrated structure. As shown in FIG. 6, multiple reflection slopes are sequentially staggered along the second direction B to form a step-shaped combined surface. As shown in FIG. 3, staggered distances between multiple reflection slopes along the second direction B are in an ascending order first and then a descending order to form a combined surface. As shown in FIG. 4, staggered distances between multiple reflection slopes along the second direction B are randomly set to form a combined surface. The combined surface can also be in another shape that facilitates processing. This is not limited herein.

Positions of multiple transceiving assemblies corresponding to multiple reflection slopes in the second direction B do not affect a position of the optical path in the direction X after being directed out of the LiDAR, and offset of the optical path for each channel in the direction X is related to the position of the reflection slope. Therefore, the positions of the multiple transceiving assemblies in the second direction B can be set randomly. Optionally, first terminals of the multiple transceiving assemblies are arranged on the same plane, which simplifies a production process. The first terminal of a transceiving assembly may be a central point of a light outgoing surface of the emission waveguide in the transceiving assembly. Optionally, as shown in FIG. 6, the distance between the first terminals of the multiple transceiving assemblies and the corresponding reflection slopes is a preset distance, and the preset distance is relatively small. With such setting, a transmission distance of the optical path between the first terminal of the transceiving assembly and the reflection slope can be short, so that crosstalk between the optical paths of the multiple transceiving assemblies can be avoided.

To increase an emission rate of the detection beam and a reception rate of the echo beam, on the basis of the foregoing embodiments, the reflection slope is a total reflection surface.

In an optional embodiment, as shown in FIG. 5, the transceiving assemblies 120 and the reflection structure 130 are arranged on the first surface 112 of the substrate 110, to improve the integration of the transceiving module 100 and reduce an assembly step of the transceiving assembly 120 and reflection structure 130. The emission waveguide 121 may use a single-mode waveguide, and the receiving waveguide 122 may use a single-mode waveguide or a multi-mode waveguide. The receiving waveguide 122 uses the multi-mode waveguide, which can improve the receiving efficiency for the echo beam. A material of the emission waveguide and the receiving waveguide can be Si or SiO₂ material, or an organic polymer material. The emission waveguide 121 and the receiving waveguide 122 can use structures with equal cross sections respectively, and can also use structures switching from the single mode to the multi-mode or from the multi-mode to the single mode. During manufacture, the organic polymer can be first directly imprinted onto the substrate 110 to form a waveguide through a nanoimprint process; or the emission waveguide 121 and the receiving waveguide 122 can be prepared first, and then the emission waveguide 121 and the receiving waveguide 122 can be assembled onto the substrate 110 in a precise assembly manner. Certainly, in another embodiment, the emission waveguide 121 and the receiving waveguide 122 can also be manufactured via etching, machining, or the like. This is not exclusively limited herein. In the foregoing embodiment, the transceiving assemblies 120 and the reflection structure 130 are disposed on the first surface 112 of the substrate 110, the detection beam emitted by the transceiving assembly 120 is emitted from the first surface 112, the echo beam is also directly emitted to the first surface 112 to enter the transceiving assembly 120, and neither the emission optical path nor the receiving optical path needs to pass through the substrate 110, thereby preventing the substrate 110 from affecting the emission rate of the detection beam and the reception rate of the echo beam, which facilitates an optical design.

In an optional embodiment, as shown in FIG. 5 and FIG. 7, an accommodating cavity 111 is disposed on the first surface 112, and the reflection structure 130 is disposed in the accommodating cavity 111. To improve utilization of the detection beam and the echo beam, during the optical design, a center of a terminal surface of the emission waveguide 121 is aligned with a center of the first reflection region, and a center of a terminal surface of the receiving waveguide 122 is aligned with a center of the second reflection region. Because the first reflection region and the second reflection region are both disposed on the reflection slope, the center of the emission waveguide, the center of the receiving waveguide, and the center of the reflection slope are at the same height as the first surface 112. As shown in FIG. 7, an accommodating cavity 111 for arranging the reflection structure 130 is disposed on the first surface 112 to adjust height of the center of the reflection slope. During preparation, the substrate 110 can be prepared first, and then a cavity with a specific depth is formed on the first surface 112 of the substrate 110 through an etching process to prepare the accommodating cavity 111; the substrate 110 with the accommodating cavity 111 can alternatively be directly manufactured via a mold; or the accommodating cavity 111 can alternatively be prepared in another method, which can be specifically determined according to a processing condition and requirement. The reflection structure 130 can be directly generated in the accommodating cavity 111, can be fixed in the accommodating cavity 111 via gluing, clamping, plugging, or another method, or can alternatively be fixed on another structure above the substrate 110 and suspended inside the accommodating cavity 111. The substrate 110 may be a substrate contained in a PLC chip, or may alternatively be a substrate contained in an SOI silicon photonics chip. This is not limited herein.

In an optional embodiment, the reflection structure 130 is fixed in the accommodating cavity 111. As shown in FIG. 6, the reflection structure 130 is an integrated structure, and the multiple reflection slopes 132 are disposed on a side of the reflection structure 130 that is opposite the emission waveguide 121 and the receiving waveguide 122, and the multiple reflection slopes 132 are connected to form a step-shaped combined surface. The reflection structure 130 can be fixed in the accommodating cavity 111 via gluing, clamping, plugging, or another method; or the reflection structure 130 can be alternatively directly generated from a bottom surface of the accommodating cavity 111. This facilitates processing and integration of the entire transceiving module into one body.

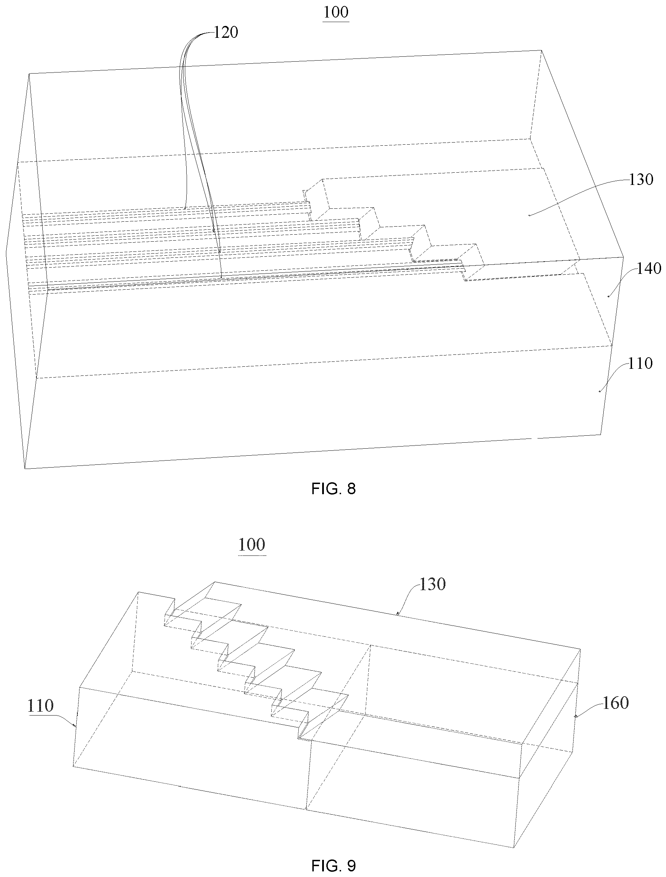

In an optional embodiment, as shown in FIG. 8, the transceiving module 100 further includes an upper coating 140 covering the first surface 112 of the substrate 110 and the transceiving assemblies 120, and the reflection structure 130 is disposed on a second surface of the upper coating 140. The second surface mentioned herein refers to a surface of the upper coating 140 that is connected to the first surface 112, that is, a lower surface of the upper coating 140 in FIG. 8. During the preparation, an assembly of the substrate 110, the emission waveguide 121 and the receiving waveguide 122 can be prepared while an assembly of the upper coating 140 and the reflection structure 130 is prepared. Then the two assemblies are snapped fitted to prepare the transceiving module 100. Such structure facilitates replacement of the reflection structure 130 and can improve processing efficiency of the transceiving module 100. In addition, with the upper coating 140 disposed, the emission waveguides 121, the receiving waveguides 122 and the reflection structure 130 can be protected, thereby avoiding damage to the waveguides during processes such as operation and assembly, and also preventing a change in an environment (such as temperature, humidity, or dust) affecting performance of the waveguides and the reflection structure 130.

In an optional embodiment, as shown in FIG. 9, the transceiving assembly (disposed on the substrate 110, not shown in the figure) and the reflection structure 130 are not disposed on the same substrate, and the transceiving assembly and the reflection structure 130 are assembled as two parts to achieve optical cooperation, which reduces difficulty of processing and preparation. The emission waveguide and the receiving waveguide of the transceiving assembly are disposed as one part of the substrate 110, and the reflection structure 130 is separately disposed as another part, and the two parts are assembled, so that the optical path of the transceiving assembly is aligned with the corresponding reflection slope of the reflection structure 130, thereby satisfying the optical design requirement. The processing method of the emission waveguide and the receiving waveguide on the substrate 110 is similar to that described above. Details are not described herein again.

Optionally, to satisfy optical performance of the reflection structure 130, for example, a flatness requirement or thermal deformation of the first reflection region and the second reflection region, a material generally used is relatively expensive. The reflection structure 130 is arranged on a base 160, and the base 160 is a structure for adjusting the height of the reflection structure 130, so that the height of the reflection structure 130 matches the height of the transceiving assemblies, and the optical paths of the transceiving assemblies are aligned with the reflection slopes of the reflection structure 130. In this way, the costs of the entire transceiving module 100 can be reduced, and the two parts can be assembled after production to achieve optical cooperation, thereby reducing processing difficulty.

An embodiment of the present application also provides a transceiving module 100. A transceiving assembly 120 in the transceiving module 100 includes one emission waveguide 121 and at least one receiving waveguide 122 arranged along a first direction A. Generally, the transceiving assembly 120 includes one emission waveguide 121 and one receiving waveguide 122 arranged side by side along the first direction A, the emission waveguide 121 is configured to transmit a detection beam, and the receiving waveguide 122 is configured to transmit an echo beam, so that functions of the transceiving assembly 120 can be realized.

When the LiDAR provided in the foregoing embodiment is used for detection, the scanning module 400 deflects the optical path to quickly scan the field of view to detect an object in the to-be-detected region. Due to relatively long time of flight of photons in long-distance detection, the scanning module 400 has moved non-negligibly during this period of time; and a spatial orientation of the scanning module 400 when receiving the echo beam is different from a spatial orientation when the detection beam is emitted, which causes a walkoff effect of a scanning receiving angle of the LiDAR. Offset caused by the walkoff effect of the receiving angle is related to the time of flight of photons. The longer the time, the larger the offset. Therefore, offset of an echo beam returned after being reflected from an object at a greater distance is greater. The walkoff effect of the scanning receiving angle of the LiDAR mentioned herein is manifested in both the direction X and the direction Y.

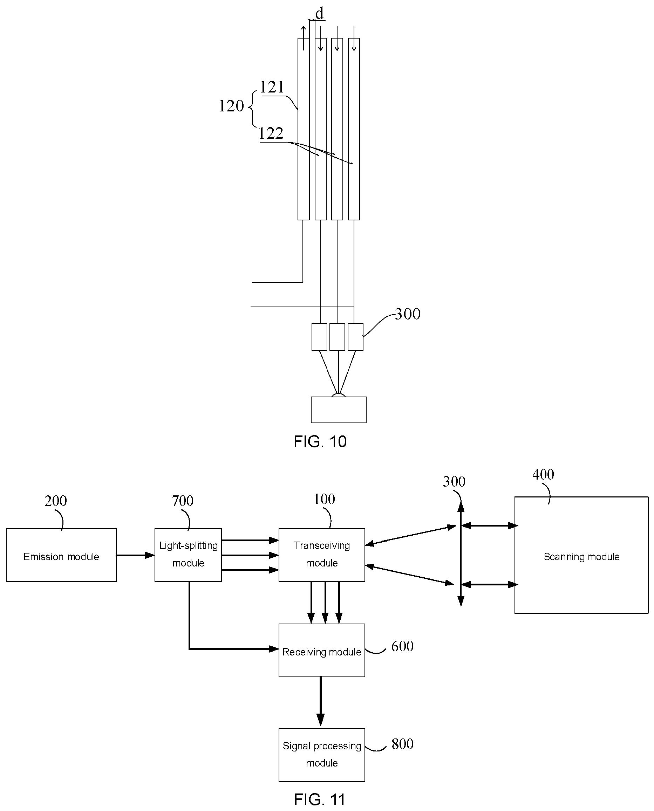

In an optional embodiment, as shown in FIG. 10, a transceiving assembly 120 includes one emission waveguide 121 and multiple receiving waveguides 122 arranged along a first direction A, and the quantity of receiving waveguides 122 is greater than or equal to two. It can be known from the foregoing description that objects at different distances correspond to different time of flight of photons. For the LiDAR, due to a large ranging range of the LiDAR, offset of the echo beams also differs greatly, and a single receiving waveguide 122 cannot effectively receive the echo beams within the entire ranging range, which affects the receiving efficiency. The multiple receiving waveguides 122 arranged along the first direction A can correspond to echo beams with various offset, thereby improving receiving coupling efficiency of the transceiving assembly 120 and further improving a ranging capability of the LiDAR.

Further, at least one receiving waveguide 122 may be on the same side of the emission waveguide 121. As shown in FIG. 10, a transceiving assembly 120 includes one emission waveguide 121 and three receiving waveguides 122 arranged along a first direction A, and the three receiving waveguides 122 are arranged in sequence on one side of the emission waveguide 121. For a scanning module moving in a fixed direction, a direction of resulting walkoff effect of the receiving angle is also always fixed. All the receiving waveguides 122 in the same transceiving assembly 120 jointly form a receiving waveguide array, to enlarge a receiving area, thereby relieving an optical walkoff problem of the LiDAR caused by the scanning module 400. Exemplarily, the scanning module 400 is a tilted reflector rotating around a vertical axis, and the received echo beam is also shifted to one side. In this case, disposing at least one receiving waveguide 122 on the same side of the emission waveguide 121 can enlarge the receiving area.

The at least one receiving waveguide 122 may alternatively be on two sides of the emission waveguide 121. As shown in FIG. 2, a transceiving assembly 120 includes one emission waveguide 121 and two receiving waveguides 122 arranged along a first direction A, and the two receiving waveguides 122 are arranged separately on two sides of the emission waveguide 121. For a reciprocating scanning module, a direction of resulting walkoff offset of the receiving angle also changes in a reciprocating manner. Exemplarily, the scanning module is a galvanometer that reciprocates, for example, a one-dimensional galvanometer that reciprocates around a vertical axis, and therefore, the received echo beam also reciprocates towards two sides (leftwards/rightwards). In this case, the multiple receiving waveguides 122 are arranged on the two sides of the emission waveguide 121, so that echo beams shifted to the two sides of the emission waveguide 121 can be received.

Further, a distance d between a receiving waveguide closest to the emission waveguide and the emission waveguide is less than or equal to 2 µm. Because the emission optical path and the receiving optical path of the transceiving assembly are approximately coaxial, the scanning module or another optical system in front of the transceiving assembly also follows the approximately coaxial design of the emission optical path and the receiving optical path, and therefore, all returned echo beams fall near the emission waveguide. To ensure the rate of receiving the echo beams by the receiving waveguide, the receiving waveguide is disposed close to the emission waveguide.

In an optional embodiment, as shown in FIG. 5, the transceiving module 100 further includes a protective layer 150 that is formed on the first surface 112 and that covers the emission waveguide 121 and the receiving waveguide therein. Disposing the protective layer 150 can protect the emission waveguide 121 and the receiving waveguide, and reduce a risk of abrasion of the emission waveguide 121 and the receiving waveguide during use or handling.

Further, in the same transceiving assembly, a light outgoing surface of the emission waveguide and a light incident surface of the receiving waveguide may be on the same plane. As shown in FIG. 2, the transceiving assembly 120 includes one emission waveguide 121 and two receiving waveguides 122, and the three waveguides are arranged along the first direction A. The light outgoing surface of the emission waveguide 121 is the terminal surface facing the reflection structure 130, the light incident surface of the receiving waveguide 122 is the terminal surface facing the reflection structure 130, and the light outgoing surface of the emission waveguide and the light incident surface of the receiving waveguide are flush with each other along the second direction B without a dislocation, and are both on the same plane, and the second direction B is perpendicular to the first direction A.

In the same transceiving assembly, the light incident surface of the receiving waveguide may be alternatively staggered behind the light outgoing surface of the emission waveguide in the second direction B. As mentioned above, in the two-dimensional scanning LiDAR, the walkoff effect of the scanning receiving angle occurs in both the direction X and the direction Y. Multiple receiving waveguides in the same transceiving assembly are arranged along the first direction A, which can compensate for the offset of the echo beam in the first direction A; and through the optical design of the transceiving module and the scanning module of the LiDAR, the first direction A can be consistent with the direction Y. At this time, with the arrangement of the multiple receiving waveguides of the LiDAR, the offset of the echo beam in the direction Y can be compensated for. By analogy, the light incident surfaces of the multiple receiving waveguides are staggered backward in the second direction B, which can compensate for the offset of the echo beam in the second direction B. Similarly, light incident surfaces of multiple receiving waveguides of the LiDAR using the foregoing optical design are staggered in the second direction B, which can compensate for the offset of the echo beam in the direction X. Disposing the receiving waveguides in this way can improve the receiving efficiency of each transceiving assembly, thereby improving the receiving efficiency of the transceiving module and the LiDAR.

On the basis of the foregoing embodiments, the second terminals of the multiple transceiving assemblies 120 are located on the same plane, and the second terminal is the terminal of the transceiving assembly 120 that receives the detection beam and outputs the echo beam. With this structure, the light incident terminals of all emission waveguides 121 and the light outgoing terminals of all receiving waveguides 122 are located on the same plane, which facilitates coupling of the transceiving module 100 and the transceiving chip 500 during use.

For the transceiving module 100 disclosed in the foregoing embodiment, first, multiple transceiving assemblies are arranged on a surface of a PLC (Planar Lightwave Circuit) chip along the first direction, so that multiple optical paths emitted and received by the transceiving module are staggered along the first direction. Then a reflection structure is disposed at the first terminal of each transceiving assembly to change a direction of the optical path of the transceiving assembly from a direction parallel to the surface of the PLC chip to a direction forming a specific angle with the surface of the PLC chip, so that multiple optical paths emitted and received by the transceiving module are staggered along the second direction. The transceiving module used in the LiDAR is arranged vertically, the first direction A is parallel to the direction Y, and the second direction B is parallel to the direction X, which can improve both resolution in the direction X and resolution in the direction Y. In addition, compared with the design method in which multiple groups of emission waveguides and receiving waveguides are stacked in a thickness direction of the PLC chip to improve both the resolution in the direction X and the resolution in the direction Y, a configuration manner of the transceiving module provided in the foregoing embodiment is used, in a production process, there is no need to perform operations such as thinning and precise alignment on a wafer of the PLC chip, which can effectively reduce the production costs of the transceiving module and improve production efficiency, so that integration of the overall structure is higher, production efficiency is higher, and the costs are lower.

Referring to FIG. 1, another embodiment of the present application provides LiDAR, including an emission module 200, a scanning module 400, a receiving module 600, and the transceiving module 100 provided in the foregoing embodiment. The emission module 200 is configured to emit a detection beam, the transceiving module 100 is configured to receive the detection beam and emit the detection beam to the scanning module 400, and is further configured to receive an echo beam transmitted by the scanning module 400, and the scanning module 400 is configured to receive and reflect the detection beam to deflect the detection beam outwards to the to-be-detected region, and is further configured to receive and reflect the echo beam, so that the echo beam is polarized and then directed to the transceiving module 100. The receiving module 600 is configured to receive and process the echo signal transmitted by the transceiving module 100.

The emission module 200 in this embodiment may include a laser source. The laser source can be a DFB laser (Distributed Feedback Laser), an EEL laser (Edge Emitting Laser), a VCSEL (Vertical Cavity Surface Emitting Laser), or a laser source combining the DFB laser and the EDFA (Erbium-doped Optical Fiber Amplifier). A coupling manner of the emission module 200, the receiving module 600 and the transceiving module 100 may be fiber coupling, grating coupling, microlens coupling, or direct coupling. The receiving module 600 may include a combination of one or more of a receiver and a processing circuit, a receiving and processing chip, and a silicon optical coherent receiving chip.

As shown in FIG. 1, the scanning module 400 deflects a beam in a direction X (which may be horizontal direction) and a direction Y (which may be vertical direction), so that the LiDAR scans in the horizontal direction and the vertical direction. It can be understood that when the LiDAR is placed forward, the direction X is the horizontal direction, and the direction Y is the vertical direction. In actual use, because the LiDAR is at different fixed positions and fixed angles, the direction X may not be the horizontal direction, and the direction Y may not be the vertical direction. The transceiving module 100 in this embodiment and the transceiving modules 100 provided in the foregoing embodiments are all described based on the direction X and the direction Y of the LiDAR, and the first direction A of the transceiving module 100 is parallel to the direction Y.

A working principle of the LiDAR provided in this embodiment is as follows:

The emission module 200 emits detection beams, and the detection beams are coupled to enter the transceiving module 100, are transmitted and emitted by the transceiving module 100 to the scanning module 400, are deflected by the scanning module 400 and are then emitted outwards to a to-be-detected region. Then, echo beams returned after being reflected by an object in the to-be-detected region are received by the scanning module 400, and the scanning module 400 deflects the echo beams and then emits the echo beams to the transceiving module 100. The echo beams are coupled to enter the transceiving module 100. The transceiving module 100 emits the echo beams to the receiving module 600, and the receiving module 600 performs calculation according to the received echo beams to obtain a detection result.

The LiDAR provided in the embodiments of the present application uses the transceiving module 100 provided in the foregoing embodiments, so that the LiDAR has multiple detection channels in the vertical direction, which can effectively improve resolution of the LiDAR in the vertical direction, and implement integration of transceiving functions without requiring a spatial optical circulator, thereby implementing a high degree of integration.

In an optional embodiment, as shown in FIG. 2, the emission module and the receiving module are located on the same transceiving chip 500, and the transceiving chip 500 is coupled to the transceiving module 100. The transceiving chip 500 can be fixed on the substrate 110 via gluing, clamping, plugging, or another manner, or can be located outside the substrate 110, which can be specifically flexibly selected according to a use need. The use of the transceiving chip 500 facilitates fast connection of the emission module and the receiving module to the emission waveguide 121 and the receiving waveguide 122 respectively, and makes the entire LiDAR small in size, low in cost, high in reliability, and easy to assemble and produce, which can realize a fiber-free solution.

In a specific embodiment, as shown in FIG. 1, the LiDAR further includes a collimating module 300, the detection beam is emitted by the transceiving module 100 to the collimating module 300, and the collimating module 300 collimates the detection beam, to reduce a divergence angle of the detection beam and make the detection beam more focused, thereby improving the detection capability. In addition, the scanning module 400 also emits the echo beam to the collimating module 300 after receiving the echo beam, and the collimating module 300 focuses the echo beam to reduce the size of the light spot of the echo beam, so that the echo beam is focused at a receiving aperture of the transceiving module 100, thereby improving the receiving efficiency of the echo beam.

In a specific embodiment, as shown in FIG. 11, the LiDAR may be frequency-modulated continuous-wave LiDAR. The frequency-modulated continuous-wave LiDAR also includes a light-splitting module 700, configured to split the detection beam emitted by the emission module 200 into two parts, one part is coupled as a detection beam to enter the transceiving module 100, and the other part is coupled as a local oscillator beam to enter the receiving module 600.

The frequency-modulated continuous-wave LiDAR further includes a signal processing module 800 for processing an echo electric signal output by the receiving module 600. The signal processing module 800 includes a signal adjustment circuit, a signal collection circuit, a signal processing circuit, an algorithm control circuit, an external interface, and the like.

The emission module 200 can emit the detection beams by using a fiber laser, the detection beams are coupled through one or more optical fibers to enter the emission waveguides 120 of the N transceiving assemblies of the transceiving module 100, the receiving waveguides 130 of the N transceiving assemblies receive the corresponding echo beams, and then the echo beams are coupled to enter the receiving module 600. The light-splitting module 700 splits the local oscillator beam into N parts to be coupled to enter the receiving module 600. The receiving module 600 includes N receiving paths, each receiving path respectively receives one local oscillator beam and one echo beam of the receiving waveguide 130, outputs the corresponding echo electric signal after frequency beating, and sends the echo electric signal to the signal processing module 800.

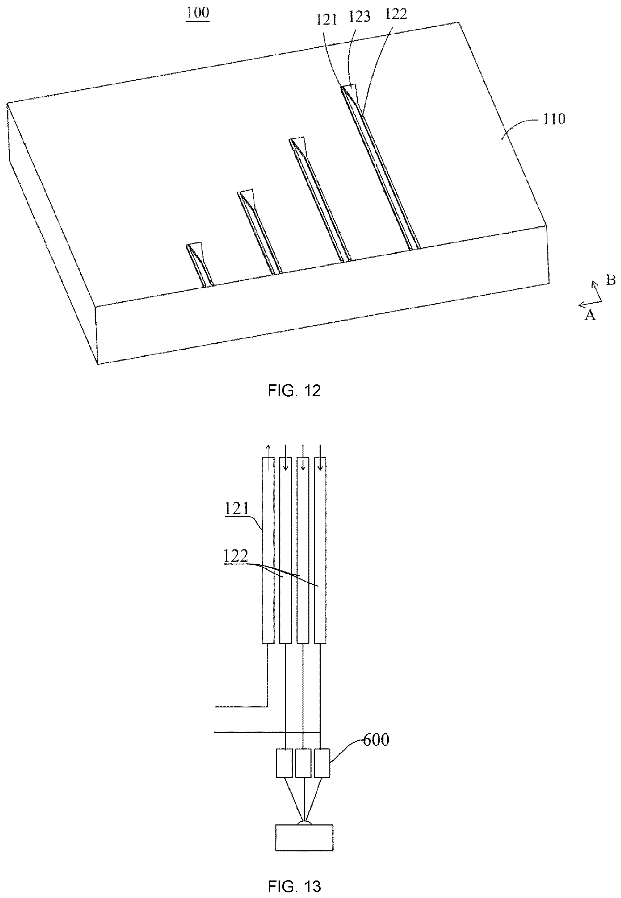

An embodiment of the present application provides another transceiving module. Referring to FIG. 12, the transceiving module 100 includes a substrate 110 and at least one transceiving assembly disposed on the first surface 112 of the substrate 100. Each transceiving assembly includes an emission waveguide 121 and a receiving waveguide 122 arranged along the first direction A and spaced apart. Each transceiving assembly is provided with one emission waveguide 121 and at least one receiving waveguide 122. The foregoing first direction A may be a length direction, a width direction or another direction of the substrate 110, which may be specifically manually set according to a use need. "Multiple" herein means "two or more than two". In addition, the emission waveguide and the receiving waveguide are disposed on the surface of the substrate, and transmission directions of the beams that pass through the emission waveguide and that enter the receiving waveguide are parallel to the surface of the substrate.

The first reflection surface 1211 is disposed on a light outgoing side of the emission waveguide 121, and the first reflection surface 1211 is configured to reflect a detection beam transmitted in the emission waveguide 121, to emit the detection beam outwards. The second reflection surface 1221 is disposed on the light incident side of the receiving waveguide 122, and the second reflection surface 1221 is configured to receive and reflect the echo beam, so that the echo beam enters the receiving waveguide 122.

In this embodiment, the first reflection surface 1211 can be formed at the terminal of the emission waveguide 121, or can be disposed independently. When disposed independently, the first reflection surface can be prepared on the substrate 110 and disposed independently of the emission waveguide 121, which can be specifically flexibly selected according to a use need. Likewise, the second reflection surface 1221 can be formed at the terminal of the receiving waveguide 122, or can be disposed independently. When disposed independently, the second reflection surface can be prepared on the substrate 110 and disposed independently of the receiving waveguide 122, which can be specifically flexibly selected according to a use need. In addition, the first reflection surface 1211 and the second reflection surface 1221 are both inclined, so that an outgoing direction of the detection beam reflected by the first reflection surface 1211 forms an included angle with the first surface 112. The included angle mentioned herein can be 90°, a specific acute angle relative to the first surface 112, or a specific obtuse angle relative to the first surface 112, which can be specifically designed based on a light emission requirement. In addition, an incident direction of the echo beam forms an included angle with the first surface 112. The included angle mentioned herein can be 90°, a specific acute angle relative to the first surface 112, or a specific obtuse angle relative to the first surface 112, which can be specifically designed based on a light emission requirement.

The emission waveguide 121 in this embodiment can be a single-mode waveguide, the receiving waveguide 122 can be a single-mode waveguide or a multi-mode waveguide, and a material of the waveguide can be a SiO₂ material, an organic polymer material, or a silicon material. In addition, the emission waveguide 121 and the receiving waveguide 122 can use structures with equal cross sections respectively, and can also use structures switching from the single mode to the multi-mode or from the multi-mode to the single mode. During manufacture, an organic polymer can be first directly imprinted on the substrate 110, and then corresponding surfaces of the emission waveguide 121 and the receiving waveguide 122 are coated to form the first reflection surface 1211 and the second reflection surface 1221; or the emission waveguide 121 and the receiving waveguide 122 can be prepared first, and then the emission waveguide 121 and the receiving waveguide 122 can be assembled onto the substrate 110 in a precise assembly manner. Certainly, in another embodiment, the emission waveguide 121 and the receiving waveguide 122 can also be manufactured via etching, machining, or the like. This is not exclusively limited herein.

In this embodiment, the substrate 110 may be on the light outgoing side of the emission waveguide 121, or on a side facing away from the light outgoing side of the emission waveguide 121. When the substrate 100 is on the light outgoing side of the emission waveguide 121, the substrate 100 needs to be made of a translucent material. At this time, the emission waveguide 121 and the receiving waveguide 122 are on an inner side of the transceiving module and are uneasy to damage. When the substrate 100 is on the side facing away from the light outgoing side of the emission waveguide 121, the beam is directly emitted out without passing through the substrate 100, and it is unnecessary to consider impact of a material of the substrate on the detection beam and the echo beam when the substrate 100 is designed, so that a large range of materials can be selected for preparing the substrate 100, which facilitates designing and processing of the substrate.

A working principle of the LiDAR provided in this embodiment of the present application is as follows:
When a target object is detected, the emission module 200 emits a detection beam, the detection beam passes through an incident terminal of the emission waveguide 121 to enter the emission waveguide 121, is transmitted by the emission waveguide 121 and then reaches the first reflection surface 1211, then is reflected by the first reflection surface 1211 to reach the collimating module 300, and is collimated by the collimating module 300, and then passes through the scanning module 400 to form the scanning beam; and the scanning beam is incident on the target object, and then the beam is reflected by the target object to form an echo beam. The echo beam passes through the scanning module 400 and the collimating module 300 in sequence to be incident on the second reflection surface 1221, and then is reflected by the second reflection surface 1221 to enter the receiving waveguide 122, then transmitted to an output terminal of the receiving waveguide 122 through the receiving waveguide 122, and then output to the receiving module 600 through the receiving waveguide 122. The receiving module 600 receives and processes the echo beam.

However, in the transceiving module 100 provided in this embodiment of the present application, the first reflection surface 1211 is disposed on the light outgoing side of the emission waveguide 121, and the second reflection surface 1221 is disposed on the light incident side of the receiving waveguide 122, so that a transmission direction of the detection beam originally parallel to the first surface 112 is changed to a direction perpendicular to the first surface 112 or a direction forming another included angle with the first surface 112, and an echo beam that is perpendicular to the first surface 112 or forms another included angle with the first surface 112 can be received by the receiving waveguide 122. In addition, the emission waveguide 121 and the receiving waveguide 122 are arranged along the first direction A and spaced apart. During use, azimuth of the transceiving module is designed, so that the first direction A is parallel to the direction Y, and the echo beam can still be received by the receiving waveguide 122 even if the echo beam and the detection beam are staggered by an angle ≥ 0.05° in the direction Y. During use, multiple transceiving assemblies are arranged in the first direction A as required, and the multiple transceiving assemblies are staggered in the second direction B parallel to the direction X, which can improve the quantities of detection channels in both the direction X and the direction Y and further improve the resolution of the LiDAR in both the direction X and the direction Y.

In addition, the transceiving module 100 provided in this embodiment of the present application is used, so that the LiDAR needs no free-space optical circulator, which reduces hardware overheads and costs, simplifies the system, and reduces complexity of the optical-mechanical system, thereby reducing a volume of the entire system and improving reliability.

It can be seen that, in the first aspect, the transceiving module 100 provided in this embodiment of the present application is provided with at least one transceiving assembly in the first direction A, a waveguide of each transceiving assembly directly transmits and receives a beam. The transceiving module 100 is integrated on a planar optical waveguide chip to implement integration of receiving and emission without using a spatial optical circulator, thereby improving integration of the LiDAR. In addition, the first reflection surface 1211 and the second reflection surface 1221 are used, so that the optical path along the direction parallel to the surface of the substrate 110 is deflected and the transceiving module 100 can emit beams in two directions, which facilitates adjustment of positions of optical paths of the transceiving assembly in two directions, or adjustment of a relative positional relationship of optical paths of multiple transceiving assemblies, thereby optimizing resolution of the LiDAR in both the direction X and the direction Y. According to the second aspect, the emission waveguide 121 and the receiving waveguide 122 of each transceiving assembly are arranged at intervals, to compensate for a walkoff effect (walkoff effect) of the receiving angle in the first direction A, thereby improving receiving efficiency in the first direction A and further improving the ranging capability of the LiDAR.

During processing, one terminal of the emission waveguide 121 can be first processed into a slope, and then the slope can be coated with a total reflection waveguide film, or attached with a reflection film or the like to form the first reflection surface 1211. All regions except the light incident region and the light outgoing region in the outer surface of the emission waveguide 121 may alternatively be coated with a total reflection waveguide film, or attached with a reflection film or the like, to prevent the detection beam transmitted in the emission waveguide 121 being emitted out from a region other than the light outgoing region of the emission waveguide 121 and affecting the amount of outgoing detection beams. The foregoing light outgoing region refers to a region of the waveguide that is covered by the detection beam in the emission waveguide 121 when being reflected by the first reflection surface and then emitted outward. Likewise, the second reflection surface 1221 in the receiving waveguide 122 can also be manufactured in the foregoing manner, and the two reflection surfaces can be prepared simultaneously or separately. All regions except the light incident region in the outer surface of the receiving waveguide 122 may alternatively be coated with a total reflection waveguide film, or attached with a reflection film or the like, to prevent the echo beam transmitted in the receiving waveguide 122 being leaked from the region other than the light incident region of the receiving waveguide 122 and affecting the amount of echo beams received by the receiving module 600. The foregoing light incident region means that the echo beam enters the receiving waveguide 122 after passing through the light incident region and being incident on the second reflection surface.

The structure provided in this embodiment facilitates processing of the first reflection surface 1211 and a second emission surface 131, and makes an overall structure of the transceiving module compact and small in size.

In the foregoing embodiments, the transceiving assembly includes N emission waveguides and N receiving waveguides, where N≥1. In an optional embodiment, the same transceiving assembly includes one emission waveguide and N receiving waveguides. When one receiving waveguide is provided in the same transceiving assembly, the structure of the transceiving assembly is simple and production costs are relatively low. When there are multiple receiving waveguides, an area of the receiving surface of the transceiving assembly can be effectively increased, thereby improving the reception rate of the echo beam and the ranging capability of the LiDAR using the transceiving assembly. When the LiDAR provided in the foregoing embodiment is used for detection, the scanning module deflects the optical path to quickly scan the field of view to detect an object in the to-be-detected region. Due to relatively long time of flight of photons in long-distance detection, the scanning module has moved non-negligibly during this period of time; and a spatial orientation of the scanning module when receiving the echo beam is different from a spatial orientation when the detection beam is emitted, which causes a walkoff effect of a scanning receiving angle of the LiDAR. Offset caused by the walkoff effect of the receiving angle is related to the time of flight of photons. The longer the time, the larger the offset. Therefore, offset of an echo beam returned after being reflected from an object at a greater distance is greater. The walkoff effect of the scanning receiving angle of the LiDAR mentioned herein is manifested in both the direction X and the direction Y. It can be known from the foregoing description that objects at different distances correspond to different time of flight of photons. For the LiDAR, due to a large ranging range of the LiDAR, offset of the echo beams also differs greatly, and a single receiving waveguide cannot effectively receive the echo beam within the entire ranging range, which affects the receiving efficiency. N receiving waveguides disposed in the transceiving assembly can correspond to echo beams with various offset, thereby improving receiving coupling efficiency of the transceiving assembly and further improving a ranging capability of the LiDAR.

In the foregoing embodiments, to ensure a good receiving effect of the receiving waveguides, a distance between the waveguides in the same transceiving assembly is less than 2 µm.

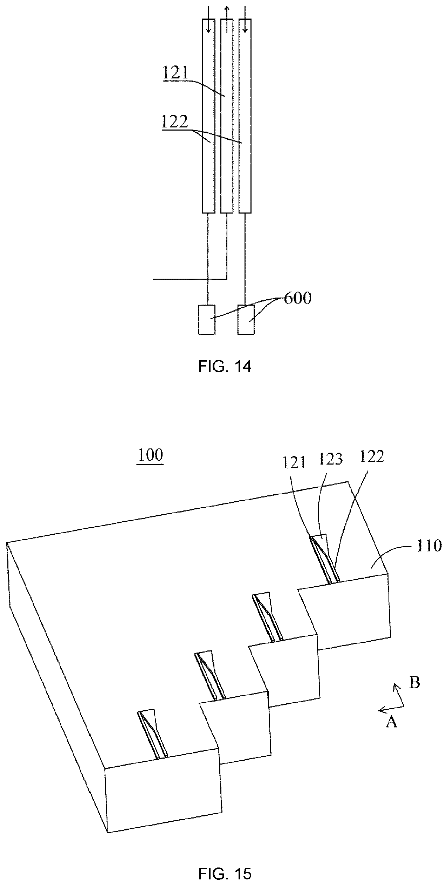

In an optional embodiment, multiple receiving waveguides are placed on either side or both sides of the emission waveguide in each transceiving assembly. As shown in FIG. 13, a transceiving assembly includes one emission waveguide 121 and three receiving waveguides 122 arranged along a first direction A, and the three receiving waveguides 122 are arranged in sequence on one side of the emission waveguide 121. For a scanning module moving in a fixed direction, a direction of resulting walkoff effect of the receiving angle is also always fixed. All the receiving waveguides 122 in the same transceiving assembly jointly form a receiving waveguide array, to enlarge a receiving area, thereby relieving an optical walkoff problem of the LiDAR caused by the scanning module 400. Exemplarily, the scanning module is a tilted reflector rotating around a vertical axis, and the received echo beam is also shifted to one side. In this case, disposing at least one receiving waveguide 122 on one side of the emission waveguide 121 can enlarge the receiving area. The at least one receiving waveguide 122 may alternatively be on two sides of the emission waveguide 121. As shown in FIG. 14, a transceiving assembly includes one emission waveguide 121 and two receiving waveguides 122 arranged along a first direction A, and the two receiving waveguides 122 are arranged separately on two sides of the emission waveguide 121. For a reciprocating scanning module, a direction of resulting walkoff offset of the receiving angle also changes in a reciprocating manner. Exemplarily, the scanning module is a galvanometer that reciprocates, for example, a one-dimensional galvanometer that reciprocates around a vertical axis, and therefore, the received echo beam also reciprocates towards two sides (for example, leftwards/rightwards). In this case, the multiple receiving waveguides 122 are arranged on the two sides of the emission waveguide 121, so that echo beams shifted to both left and right sides of the emission waveguide 121 can be received.

In an optional embodiment, in the same transceiving assembly, the first reflection surface of the emission waveguide and the second reflection surface of the receiving waveguide are aligned in the first direction, which facilitates an optical path design and simultaneous processing of the two reflection surfaces.

To further improve the reception rate of the echo beam and the coupling efficiency of coupling the echo beam to enter the receiving waveguide, on the basis of the foregoing embodiments, as shown in FIG. 12, a flared structure 123 is formed at the input terminal of the receiving waveguide 122, and a width of the flared structure 123 in the first direction A is greater than a width of the single-mode waveguide in the receiving waveguide 122 in the first direction A.

The flared structure 123 in this embodiment is a structure whose width decreases along a transmission direction of the echo signal, and may be a tapered structure that changes uniformly or non-uniformly. The arrangement of the flared structure 123 enlarges the signal receiving surface of the receiving waveguide 122 in the first direction A. Under different scanning conditions, scanning speeds of the scanning apparatus are different, and therefore, the echo beams have different offset in the vertical direction, and the receiving waveguide 122 can still receive the echo beam with sufficient energy (provided that the minimum requirement for system receiving sensitivity is satisfied), which can further effectively alleviate impact of the walkoff effect of the receiving angle on the receiving efficiency of the FMCW LiDAR. Using the transceiving module 100 provided in this embodiment of the present application can effectively improve the efficiency of receiving the echo beam by the FMCW LiDAR, thereby ensuring the detection distance of the LiDAR.

The foregoing flared structure can be arranged into various forms. Referring to FIG. 12, in an optional embodiment, a tapered structure is formed at the input terminal of the receiving waveguide 122, and the tapered structure is the flared structure 123. With this structure, the transceiving module 100 provided in this embodiment and the LiDAR using the transceiving module 100 can still effectively receive echo beams with different offset under different degrees of the walkoff effects of the receiving angles, thereby satisfying a system requirement of near-range and far-range detection and improving ranging performance.

In a specific embodiment, the receiving waveguide includes a multi-mode waveguide, a tapered transition waveguide and a single-mode waveguide connected in sequence. The multi-mode waveguide and the tapered transition waveguide are combined to form the flared structure. The emission waveguide is the single-mode waveguide. In some other embodiments, for the multi-mode waveguide, a few-mode waveguide may also be used.

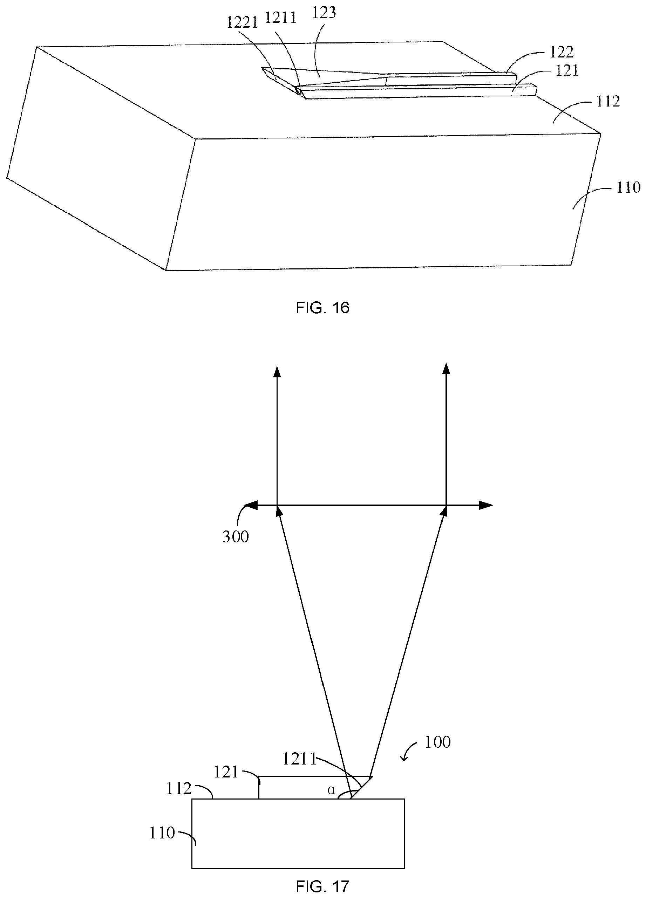

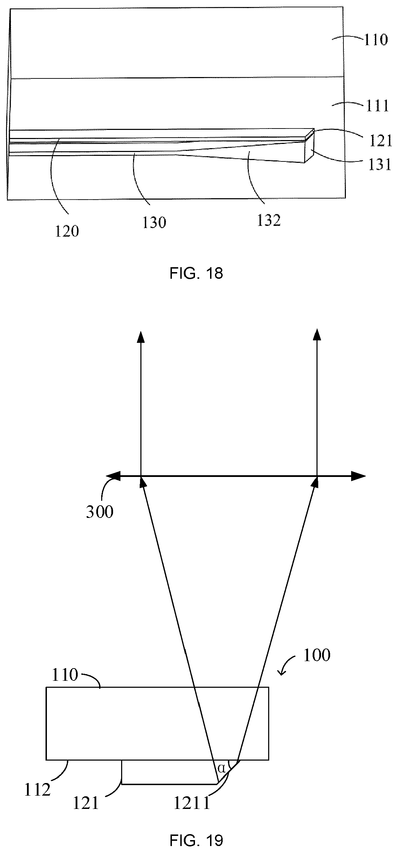

In an optional embodiment, as shown in FIG. 18 and FIG. 19, the substrate 110 is on the light outgoing side of the emission waveguide 121. For example, the emission waveguide 121 is arranged on a lower surface of the substrate 110, an included angle between the first reflection surface 1211 and the first surface 112 is any angle between 30° and 60°, and an included angle between the second reflection surface 1221 and the first surface 112 is also any angle between 30° and 60°. In another optional embodiment, as shown in FIG. 16 and FIG. 17, the substrate 110 is on a side facing away from the light outgoing side of the emission waveguide 121, the emission waveguide 121 is arranged on an upper surface of the substrate 110, an included angle between the first reflection surface 1211 and the first surface 112 is any angle between 120° and 150°, and an included angle between the second reflection surface 1221 and the first surface 112 is also any angle between 120° and 150°. The foregoing angles used for the first reflection surface 1211 and the second reflection surface 1221 can satisfy a general detection requirement. The specific angle used can be set according to a position coordination relationship between the transceiving module and the scanning module during the design of the LiDAR system, the requirement for the detection angle of view, and the like, and is not exclusively limited herein. Tilt angles of the first reflection surface 1211 and the second reflection surface 1221 can be the same or different, and can be specifically set according to a detection requirement and an actual detection effect. The same tilt angle of the first reflection surface 1211 and the second reflection surface 1221 facilitates simultaneous processing and can effectively improve processing efficiency. With different tilt angles, the first reflection surface 1211 and the second reflection surface 1221 can be adapted to different working environments. For example, when the echo beam is shifted within a specific range, a larger tilt angle can be set for the second reflection surface 1221, to receive more echo beams.

In a specific embodiment, as shown in FIG. 19, the substrate 110 is on the light outgoing side of the emission waveguide 121, and included angles between the first reflection surface 1211, the second reflection surface 1221 and the first surface 112 are 45°. In another specific embodiment, as shown in FIG. 17, the substrate 110 is on a side facing away from the light outgoing side of the emission waveguide 121, and included angles between the first reflection surface 1211, the second reflection surface 1221 and the first surface 112 are 135°.

To improve the reflectivity of the transceiving module provided in the foregoing embodiments and reduce loss of light energy, in an optional embodiment, both the first reflection surface and the second reflection surface are coated with a high-reflection film.

In an optional embodiment, as shown in FIG. 12, the quantity of transceiving assemblies is greater than or equal to 2, and the multiple transceiving assemblies are arranged in sequence along the first direction. Each transceiving assembly is a detection channel, and multiple transceiving assemblies are used, that is, the quantity of detection channels of the LiDAR is increased, which can increase the resolution in the first direction (that is, the direction Y) and certainly improve receiving efficiency to some extent.

In an optional embodiment, the first terminals of the multiple transceiver modules are located on the same plane, and the second terminals are located on the same plane. The first terminal is the terminal of the transceiving assembly that emits the detection beam and receives the echo beam, and the second terminal is the terminal of the transceiving assembly that receives the detection beam and outputs the echo beam. The facilitates production of the transceiving assembly, provided that both the first terminal and the second terminal are formed on the surface of the substrate.

In another optional embodiment, as shown in FIG. 12, the first terminals of the multiple transceiving assemblies are sequentially staggered in the second direction B, and the second direction B is perpendicular to the first direction A. Each transceiving assembly is provided with an emission waveguide, and as mentioned herein, the first terminals of the multiple transceiving assemblies are sequentially staggered in the second direction B, and this indicates that center points of the light outgoing surfaces of the emission waveguides in the multiple transceiving assemblies are sequentially staggered along the second direction. In this embodiment, the first terminals of all the transceiving assemblies are sequentially staggered in the second direction B, which can increase the quantity of channels in the second direction B. When the transceiving assembly is disposed vertically and the first direction A of the transceiving assembly is parallel to the direction Y, the second direction is parallel to the direction X, and therefore, the quantity of detection channels of the LiDAR in the direction X can be effectively increased, that is, resolution of the corresponding LiDAR in the direction X is increased, which improves detection accuracy of the LiDAR and can also reduce an adverse effect of the walkoff effect of the receiving angle in the direction X on detection of the LiDAR, thereby improving a ranging capability of the corresponding LiDAR.

On the basis of the foregoing embodiments, the second terminals of the multiple transceiving assemblies are located on the same plane. With this structure, the light incident terminals of all emission waveguides 121 and the light outgoing terminals of all receiving waveguides 122 are located on the same plane, which facilitates a design of a coupling packaging structure of the emission waveguide and the emission module, and a design of a coupling packaging structure of the receiving waveguide and the receiving module.

In another optional embodiment, as shown in FIG. 15, there are multiple transceiving assemblies, all the transceiving assemblies have the same length, the first terminals of the multiple transceiving assemblies are staggered in sequence in the second direction B perpendicular to the first direction A, and the second terminals of the multiple transceiving assemblies are step-shaped. Similar to the foregoing embodiment, in this embodiment, the quantity of channels in the second direction B can be increased; and for the LiDAR using the transceiving module, the resolution in the direction X can be improved, the detection accuracy can be improved, and an adverse effect of the walkoff effect of the receiving angle in the direction X on detection of the LiDAR can also be reduced, thereby improving the ranging capability. In addition, with the structure provided in this embodiment, transceiving assemblies can be first separately prepared in batches during assembly, and then the multiple transceiving assemblies can be assembled into one entity via mechanical assembly to form the transceiving module 100, which facilitates improvement of production efficiency.

In conclusion, in the two embodiments corresponding to FIG. 12 and FIG. 15, first, multiple transceiving assemblies are arranged on a surface of a PLC (Planar Lightwave Circuit) chip along the first direction, so that multiple optical paths emitted and received by the transceiving module are staggered along the first direction. Then the first reflection surface is disposed on the light outgoing side of the emission waveguide of each transceiving assembly, and the second reflection surface is disposed on the light incident side of the receiving waveguide, to change a direction of the optical path of the transceiving assembly from a direction parallel to the surface of the PLC chip to a direction forming a specific angle with the surface of the PLC chip, so that multiple optical paths emitted and received by the transceiving module are staggered along the second direction. The transceiving module used in the LiDAR is arranged vertically, the first direction A is parallel to the direction Y, and the second direction B is parallel to the direction X, which can improve both resolution in the direction X and resolution in the direction Y. In addition, compared with the design method in which multiple groups of emission waveguides and receiving waveguides are stacked in a thickness direction of the PLC chip to improve both the resolution in the direction X and the resolution in the direction Y, a configuration manner of the transceiving module provided in the foregoing embodiment is used, in a production process, there is no need to perform operations such as thinning and precise alignment on a wafer of the PLC chip, which can effectively reduce the production costs of the transceiving module and improve production efficiency, so that integration of the overall structure is higher, production efficiency is higher, and the costs are lower.

Another embodiment of the present application provides LiDAR, including an emission module 200, a scanning module 400, a receiving module 600, and the transceiving module 100 provided in the foregoing embodiment. The emission module 200 is configured to emit a detection beam, the transceiving module 100 is configured to receive the detection beam and emit the detection beam to the scanning module 400, and is also configured to receive the echo beam transmitted by the scanning module 400, and the scanning module 400 is configured to receive and reflect the detection beam to deflect the detection beam outwards to the to-be-detected region, and is also configured to receive and reflect the echo beam, so that the echo beam is polarized and then directed to the transceiving module 100. The receiving module 600 is configured to receive and process the echo signal transmitted by the transceiving module 100.

The emission module 200 in this embodiment may include a laser source. The laser source can be a DFB laser (Distributed Feedback Laser), an EEL laser (Edge Emitting Laser), a VCSEL (Vertical Cavity Surface Emitting Laser), or a laser source combining the DFB laser and the EDFA (Erbium-doped Optical Fiber Amplifier). A coupling manner of the emission module 200, the receiving module 600 and the transceiving module 100 may be fiber coupling, grating coupling, microlens coupling, or direct coupling. The receiving module 600 may include a combination of one or more of a receiver and a processing circuit, a receiving and processing chip, and a silicon optical coherent receiving chip.

As shown in FIG. 1, the scanning module 400 deflects a beam in a direction X (which may be horizontal direction) and a direction Y (which may be vertical direction), so that the LiDAR scans in the horizontal direction and the vertical direction. It can be understood that when the LiDAR is placed forward, the direction X is the horizontal direction, and the direction Y is the vertical direction. In actual use, because the LiDAR is at different fixed positions and fixed angles, the direction X may not be the horizontal direction, and the direction Y may not be the vertical direction. The transceiving module 100 in this embodiment and the transceiving modules 100 provided in the foregoing embodiments are all described based on the direction X and the direction Y of the LiDAR, and the first direction A of the transceiving module 100 is parallel to the direction Y.

A working principle of the LiDAR provided in this embodiment is as follows:
The emission module 200 emits detection beams, and the detection beams are coupled to enter the transceiving module 100, are transmitted and emitted by the transceiving module 100 to the scanning module 400, are deflected by the scanning module 400 and are then emitted outwards to a to-be-detected region. Then, echo beams returned after being reflected by an object in the to-be-detected region are received by the scanning module 400, and the scanning module 400 deflects the echo beams and then emits the echo beams to the transceiving module 100. The echo beams are coupled to enter the transceiving module 100. The transceiving module 100 emits the echo beams to the receiving module 600, and the receiving module 600 performs calculation according to the received echo beams to obtain a detection result.

The LiDAR provided in the embodiments of the present application uses the transceiving module 100 provided in the foregoing embodiments, so that the LiDAR has multiple detection channels in the vertical direction, which can effectively improve resolution of the LiDAR in the vertical direction, and implement integration of transceiving functions without requiring a spatial optical circulator, thereby implementing a high degree of integration.

In a specific embodiment, as shown in FIG. 1, the LiDAR further includes a collimating module 300, the detection beam is emitted by the transceiving module 100 to the collimating module 300, and the collimating module 300 collimates the detection beam, to reduce a divergence angle of the detection beam and make the detection beam more focused, thereby improving the detection capability. In addition, the scanning module 400 also emits the echo beam to the collimating module 300 after receiving the echo beam, and the collimating module 300 focuses the echo beam to reduce the size of the light spot of the echo beam, so that the echo beam is focused at a receiving aperture of the transceiving module 100, thereby improving the receiving efficiency of the echo beam.

In a specific embodiment, as shown in FIG. 10, the LiDAR may be frequency-modulated continuous-wave LiDAR. The frequency-modulated continuous-wave LiDAR also includes a light-splitting module 700, configured to split the detection beam emitted by the emission module 200 into two parts, one part is coupled as a detection beam to enter the transceiving module 100, and the other part is coupled as a local oscillator beam to enter the receiving module 600.

The frequency-modulated continuous-wave LiDAR further includes a signal processing module 800 for processing an echo electric signal output by the receiving module 600. The signal processing module 800 includes a signal adjustment circuit, a signal collection circuit, a signal processing circuit, an algorithm control circuit, an external interface, and the like.

The emission module 200 can emit the detection beams by using a fiber laser, the detection beams are coupled through one or more optical fibers to enter the emission waveguides 121 of the N transceiving assemblies of the transceiving module 100, the receiving waveguides 122 of the N transceiving assemblies receive the corresponding echo beams, and then the echo beams are coupled to enter the receiving module 600. The light-splitting module 700 splits the local oscillator beam into N parts to be coupled to enter the receiving module 600. The receiving module 600 includes N receiving paths, each receiving path respectively receives one local oscillator beam and one echo beam of the receiving waveguide 122, outputs the corresponding echo electric signal after frequency beating, and sends the echo electric signal to the signal processing module 800.

## Claims

1. A transceiving module (100), comprising a substrate (110) and multiple transceiving assemblies (120), **characterized in that**
the multiple transceiving assemblies (120) are arranged on the substrate (110) in sequence along a first direction (A), each transceiving assembly (120) comprises an emission waveguide (121) and at least one receiving waveguide (122) arranged along the first direction (A), the emission waveguide (121) is configured to transmit and emit a detection beam, and the receiving waveguide (122) is configured to receive and transmit an echo beam;
the transceiving module (110) further comprises a reflection structure (130) formed on a first side of the transceiving assemblies (120), the first side being a side on which the transceiving assemblies (120) emit detection beams and receive echo beams, the reflection structure (130) comprises multiple reflection slopes (132) corresponding in quantity to the multiple transceiving assemblies (120), each reflection slope (132) and corresponding transceiving assembly (120) are spaced apart along a second direction (B), the second direction (B) being perpendicular to the first direction (A);
each reflection slope (132) comprises a first reflection region corresponding to the emission waveguide (121) and a second reflection region corresponding to the receiving waveguide (122), wherein the first reflection region is configured to reflect the detection beam emitted by the emission waveguide (121) and to direct the detection beam outwards, and the second reflection region is configured to receive and reflect the echo beam, so that the echo beam enters the receiving waveguide (122); and
the multiple reflection slopes (132) are staggered along a second direction (B).

2. The transceiving module (100) according to claim 1, wherein the multiple reflection slopes (132) are sequentially connected to form a combined surface.

3. The transceiving module (100) according to claim 1, wherein the transceiving assemblies (120) and the reflection structure (130) are disposed on a first surface (112) of the substrate (110).

4. The transceiving module (100) according to claim 3, wherein an accommodating cavity (111) is disposed on the first surface (112), and the reflection structure (130) is disposed in the accommodating cavity (111).

5. The transceiving module (100) according to claim **4,** wherein the reflection structure (130) is fixed in the accommodating cavity (111),
and/or
wherein the transceiving module (100) further comprises an upper coating (140) covering the first surface (112) of the substrate (110) and the transceiving assemblies (120), and the reflection structure (130) is disposed on a second surface of the upper coating (140).

6. The transceiving module (100) according to claim 1, wherein the at least one receiving waveguide (122) is on a same side or two sides of the emission waveguide (121).

7. The transceiving module (100) according to claim 6, wherein in a same transceiving assembly (120), a light outgoing surface of the emission waveguide (121) and a light incident surface of the receiving waveguide (122) are on a same plane; or
the light incident surface of the receiving waveguide (122) is staggered behind the light outgoing surface of the emission waveguide (121) in the second direction (B).

8. The transceiving module (100) according to claim 6, wherein the emission waveguide (121) and the at least one receiving waveguide (122) are spaced apart along the first direction (A);
a first reflection surface (1211) is disposed on a light outgoing side of the emission waveguide (121), and the first reflection surface (1211) is configured to reflect a detection beam transmitted in the emission waveguide (121) and to direct the detection beam outwards; and
a second reflection surface (1221) is disposed on a light incident side of each of the at least one receiving waveguide (122), and the second reflection surface (1221) is configured to receive and reflect an echo beam, so that the echo beam enters the receiving waveguide (122).

9. The transceiving module (100) according to claim 8, wherein the first reflection surface (1211) is formed on a light outgoing terminal of the emission waveguide (121), and the second reflection surface (1221) is formed on a light incident terminal of the receiving waveguide (122).

10. The transceiving module (100) according to claim 9, wherein the transceiving assembly (120) comprises one emission waveguide (121) and one receiving waveguide (122) arranged along the first direction (A), and a distance between the emission waveguide (121) and the receiving waveguide (122) is less than 2 µm,
and/or
wherein the first reflection surface (1211) of the emission waveguide (121) and the second reflection surface (1221) of the receiving waveguide (122) that belong to a same transceiving assembly (120) are aligned in the first direction (A).

11. The transceiving module (100) according claims 8, wherein a flared structure (123) is formed on an input terminal of the receiving waveguide (122);
and/or wherein:
the substrate (110) is on a light outgoing side of the detection beam, an included angle between the first reflection surface (1211) and a first surface of the substrate (110) is 30° to 60°, and an included angle between the second reflection surface (1221) and the first surface (112) is 30° to 60°, or
the substrate (110) is on a side facing away from the light outgoing side of the detection beam, an included angle between the first reflection surface (1211) and the first surface (112) is 120° to 150°, and an included angle between the second reflection surface (1221) and the first surface (112) is 120° to 150°.

12. The transceiving module (1221) according to claim 8, wherein both the first reflection surface (1211) and the second reflection surface (1221) are coated with a high-reflection film; and
the quantity of the transceiving assemblies (120) is greater than or equal to 2.

13. A LiDAR, comprising:
an emission module (200), configured to emit a detection beam;
a transceiving module (100) according to claim 1;
a scanning module (400), configured to deflect the detection beam entered the transceiving module (100) and directed by the transceiving module (100) towards the scanning module (400) and direct the detection beam outwards for detection; and
a receiving module (600), wherein the scanning module (400) is further configured to receive the echo beam, deflect the echo beam and direct the echo beam to the transceiving module (100), and the receiving module (600) is configured to receive the echo beam from the transceiving module (100).

## Patentansprüche

1. Sende-Empfangs-Modul (100), umfassend ein Substrat (110) und mehrere Sende-Empfangs-Baugruppen (120), **dadurch gekennzeichnet, dass**
die mehreren Sende-Empfangs-Baugruppen (120) sequentiell entlang einer ersten Richtung (A) auf dem Substrat (110) angeordnet sind, wobei jede Sende-Empfangs-Baugruppe (120) einen Sende-Wellenleiter (121) und mindestens einen Empfangs-Wellenleiter (122) umfasst, die entlang der ersten Richtung (A) angeordnet sind, wobei der Sende-Wellenleiter (121) ausgelegt ist, einen Detektionsstrahl zu übertragen und abzustrahlen, und der Empfangs-Wellenleiter (122) ausgelegt ist, einen Echo-Strahl zu empfangen und zu übertragen;
das Sende-Empfangs-Modul (100) ferner eine auf einer ersten Seite der Sende-Empfangs-Baugruppen (120) ausgebildete Reflexionsstruktur (130) umfasst, wobei die erste Seite eine Seite ist, auf welcher die Sende-Empfangs-Baugruppen (120) Detektionsstrahlen abstrahlen und Echo-Strahlen empfangen, wobei die Reflexionsstruktur (130) mehrere in ihrer Anzahl den mehreren Sende-Empfangs-Baugruppen (120) entsprechende Reflexionsschrägen (132) umfasst, wobei jede Reflexionsschräge (132) und die entsprechende Sende-Empfangs-Baugruppe (120) entlang einer zweiten Richtung (B) beabstandet sind, wobei die zweite Richtung (B) senkrecht zur ersten Richtung (A) verläuft;
jede Reflexionsschräge (132) eine erste Reflexionsregion, die dem Sende-Wellenleiter (121) entspricht, und eine zweite Reflexionsregion, die dem Empfangs-Wellenleiter (122) entspricht, umfasst, wobei die erste Reflexionsregion ausgelegt ist, den vom Sende-Wellenleiter (121) abgestrahlten Detektionsstrahl zu reflektieren und nach außen zu lenken, und die zweite Reflexionsregion ausgelegt ist, den Echo-Strahl zu empfangen und zu reflektieren, sodass der Echo-Strahl in den Empfangs-Wellenleiter (122) eintritt; und
die mehreren Reflexionsschrägen (132) entlang der zweiten Richtung (B) versetzt zueinander angeordnet sind.

2. Sende-Empfangs-Modul (100) nach Anspruch 1, wobei die mehreren Reflexionsschrägen (132) sequentiell miteinander verbunden sind, um eine kombinierte Fläche zu bilden.

3. Sende-Empfangs-Modul (100) nach Anspruch 1, wobei die Sende-Empfangs-Baugruppen (120) und die Reflexionsstruktur (130) auf einer ersten Oberfläche (112) des Substrats (110) angeordnet sind.

4. Sende-Empfangs-Modul (100) nach Anspruch 3, wobei auf der ersten Oberfläche (112) eine Aufnahmekavität (111) angeordnet ist, und die Reflexionsstruktur (130) in der Aufnahmekavität (111) angeordnet ist.

5. Sende-Empfangs-Modul (100) nach Anspruch 4, wobei die Reflexionsstruktur (130) in der Aufnahmekavität (111) fixiert ist,
und/oder
wobei das Sende-Empfangs-Modul (100) ferner eine die erste Oberfläche (112) des Substrats (110) und die Sende-Empfangs-Baugruppen (120) abdeckende Deckschicht (140) umfasst, und die Reflexionsstruktur (130) auf einer zweiten Oberfläche der Deckschicht (140) angeordnet ist.

6. Sende-Empfangs-Modul (100) nach Anspruch 1, wobei der mindestens eine Empfangs-Wellenleiter (122) auf derselben Seite oder auf zwei Seiten des Sende-Wellenleiters (121) angeordnet ist.

7. Sende-Empfangs-Modul (100) nach Anspruch 6, wobei bei einer gleichen Sende-Empfangs-Baugruppe (120) eine Lichtaustrittsfläche des Sende-Wellenleiters (121) und eine Lichteinfallsfläche des Empfangs-Wellenleiters (122) in einer gemeinsamen Ebene liegen; oder
die Lichteinfallsfläche des Empfangs-Wellenleiters (122) in der zweiten Richtung (B) hinter der Lichtaustrittsfläche des Sende-Wellenleiters (121) versetzt angeordnet ist.

8. Sende-Empfangs-Modul (100) nach Anspruch 6, wobei der Sende-Wellenleiter (121) und der mindestens eine Empfangs-Wellenleiter (122) entlang der ersten Richtung (A) beabstandet sind;
auf einer Lichtaustrittsseite des Sende-Wellenleiters (121) eine erste Reflexionsfläche (1211) angeordnet ist, und die erste Reflexionsfläche (1211) ausgelegt ist, einen im Sende-Wellenleiter (121) übertragenen Detektionsstrahl zu reflektieren und nach außen zu lenken; und
auf einer Lichteinfallsseite jedes des mindestens einen Empfangs-Wellenleiters (122) eine zweite Reflexionsfläche (1221) angeordnet ist, und die zweite Reflexionsfläche (1221) ausgelegt ist, einen Echo-Strahl zu empfangen und zu reflektieren, sodass der Echo-Strahl in den Empfangs-Wellenleiter (122) eintritt.

9. Sende-Empfangs-Modul (100) nach Anspruch 8, wobei die erste Reflexionsfläche (1211) an einem Lichtaustrittsende des Sende-Wellenleiters (121) ausgebildet ist, und die zweite Reflexionsfläche (1221) an einem Lichteinfallsende des Empfangs-Wellenleiters (122) ausgebildet ist.

10. Sende-Empfangs-Modul (100) nach Anspruch 9, wobei die Sende-Empfangs-Baugruppe (120) einen Sende-Wellenleiter (121) und einen Empfangs-Wellenleiter (122) umfasst, die entlang der ersten Richtung (A) angeordnet sind, und ein Abstand zwischen dem Sende-Wellenleiter (121) und dem Empfangs-Wellenleiter (122) kleiner als 2 µm ist,
und/oder
wobei die erste Reflexionsfläche (1211) des Sende-Wellenleiters (121) und die zweite Reflexionsfläche (1221) des Empfangs-Wellenleiters (122), die zu derselben Sende-Empfangs-Baugruppe (120) gehören, in der ersten Richtung (A) fluchten.

11. Sende-Empfangs-Modul (100) nach Anspruch 8, wobei an einem Eingangsende des Empfangs-Wellenleiters (122) eine Trichterstruktur (123) ausgebildet ist;
und/oder wobei:
das Substrat (110) auf einer Lichtaustrittsseite des Detektionsstrahls angeordnet ist, ein Einschlusswinkel zwischen der ersten Reflexionsfläche (1211) und einer ersten Oberfläche des Substrats (110) 30° bis 60° beträgt und ein Einschlusswinkel zwischen der zweiten Reflexionsfläche (1221) und der ersten Oberfläche (112) 30° bis 60° beträgt, oder
das Substrat (110) auf einer von der Lichtaustrittsseite des Detektionsstrahls abgewandten Seite angeordnet ist, ein Einschlusswinkel zwischen der ersten Reflexionsfläche (1211) und der ersten Oberfläche (112) 120° bis 150° beträgt und ein Einschlusswinkel zwischen der zweiten Reflexionsfläche (1221) und der ersten Oberfläche (112) 120° bis 150° beträgt.

12. Sende-Empfangs-Modul (100) nach Anspruch 8, wobei sowohl die erste Reflexionsfläche (1211) als auch die zweite Reflexionsfläche (1221) mit einer Hochreflexionsschicht versehen sind; und
die Anzahl der Sende-Empfangs-Baugruppen (120) größer oder gleich 2 ist.

13. LiDAR, umfassend:
ein Emissionmodul (200), das ausgelegt ist, einen Detektionsstrahl abzustrahlen;
ein Sende-Empfangs-Modul (100) nach Anspruch 1;
ein Scanmodul (400), das ausgelegt ist, den in das Sende-Empfangs-Modul (100) eingetretenen und vom Sende-Empfangs-Modul (100) zum Scanmodul (400) gelenkten Detektionsstrahl abzulenken und nach außen zur Detektion zu lenken; und
ein Empfangsmodul (600), wobei das Scanmodul (400) ferner ausgelegt ist, den Echo-Strahl zu empfangen, diesen abzulenken und zum Sende-Empfangs-Modul (100) zu leiten, und das Empfangsmodul (600) ausgelegt ist, den vom Sende-Empfangs-Modul (100) kommenden Echo-Strahl zu empfangen.

## Revendications

1. Module émetteur-récepteur (100), comprenant un substrat (110) et plusieurs ensembles émetteur-récepteur (120), **caractérisé en ce que**
les plusieurs ensembles émetteur-récepteur (120) sont agencés sur le substrat (110) séquentiellement le long d'une première direction (A), chaque ensemble émetteur-récepteur (120) comprenant un guide d'onde d'émission (121) et au moins un guide d'onde de réception (122) agencés le long de la première direction (A), le guide d'onde d'émission (121) étant configuré pour transmettre et émettre un faisceau de détection, et le guide d'onde de réception (122) étant configuré pour recevoir et transmettre un faisceau d'écho ;
le module émetteur-récepteur (100) comprend en outre une structure de réflexion (130) formée sur un premier côté des ensembles émetteur-récepteur (120), le premier côté étant un côté par lequel les ensembles émetteur-récepteur (120) émettent les faisceaux de détection et reçoivent les faisceaux d'écho, la structure de réflexion (130) comprend plusieurs pentes de réflexion (132) dont le nombre correspond à celui des plusieurs ensembles émetteur-récepteur (120), chaque pente de réflexion (132) et l'ensemble émetteur-récepteur (120) correspondant sont espacés le long d'une seconde direction (B), la seconde direction (B) étant perpendiculaire à la première direction (A) ;
chaque pente de réflexion (132) comprend une première région de réflexion correspondant au guide d'onde d'émission (121) et une seconde région de réflexion correspondant au guide d'onde de réception (122), la première région de réflexion étant configurée pour réfléchir le faisceau de détection émis par le guide d'onde d'émission (121) et pour diriger le faisceau de détection vers l'extérieur, et la seconde région de réflexion étant configurée pour recevoir et réfléchir le faisceau d'écho, de sorte que le faisceau d'écho pénètre dans le guide d'onde de réception (122) ; et
les plusieurs pentes de réflexion (132) sont décalées les unes par rapport aux autres le long de la seconde direction (B).

2. Module émetteur-récepteur (100) selon la revendication 1, dans lequel les plusieurs pentes de réflexion (132) sont reliées séquentiellement pour former une surface combinée.

3. Module émetteur-récepteur (100) selon la revendication 1, dans lequel les ensembles émetteur-récepteur (120) et la structure de réflexion (130) sont disposés sur une première surface (112) du substrat (110).

4. Module émetteur-récepteur (100) selon la revendication 3, dans lequel une cavité de logement (111) est disposée sur la première surface (112), et la structure de réflexion (130) est disposée dans la cavité de logement (111).

5. Module émetteur-récepteur (100) selon la revendication 4, dans lequel la structure de réflexion (130) est fixée dans la cavité de logement (111),
et/ou
dans lequel le module émetteur-récepteur (100) comprend en outre un revêtement supérieur (140) recouvrant la première surface (112) du substrat (110) et les ensembles émetteur-récepteur (120), et la structure de réflexion (130) est disposée sur une seconde surface du revêtement supérieur (140).

6. Module émetteur-récepteur (100) selon la revendication 1, dans lequel l'au moins un guide d'onde de réception (122) est du même côté ou des deux côtés du guide d'onde d'émission (121).

7. Module émetteur-récepteur (100) selon la revendication 6, dans lequel dans un même ensemble émetteur-récepteur (120), une surface de sortie de lumière du guide d'onde d'émission (121) et une surface d'entrée de lumière du guide d'onde de réception (122) sont situées dans un même plan ; ou
la surface d'entrée de lumière du guide d'onde de réception (122) est décalée en retrait par rapport à la surface de sortie de lumière du guide d'onde d'émission (121) selon la seconde direction (B).

8. Module émetteur-récepteur (100) selon la revendication 6, dans lequel le guide d'onde d'émission (121) et l'au moins un guide d'onde de réception (122) sont espacés le long de la première direction (A) ;
une première surface de réflexion (1211) est disposée sur un côté de sortie de lumière du guide d'onde d'émission (121), et la première surface de réflexion (1211) est configurée pour réfléchir un faisceau de détection transmis dans le guide d'onde d'émission (121) et pour diriger le faisceau de détection vers l'extérieur ; et
une seconde surface de réflexion (1221) est disposée sur un côté d'entrée de lumière de chacun de l'au moins un guide d'onde de réception (122), et la seconde surface de réflexion (1221) est configurée pour recevoir et réfléchir un faisceau d'écho, de sorte que le faisceau d'écho pénètre dans le guide d'onde de réception (122).

9. Module émetteur-récepteur (100) selon la revendication 8, dans lequel la première surface de réflexion (1211) est formée sur une extrémité de sortie de lumière du guide d'onde d'émission (121), et la seconde surface de réflexion (1221) est formée sur une extrémité d'entrée de lumière du guide d'onde de réception (122).

10. Module émetteur-récepteur (100) selon la revendication 9, dans lequel l'ensemble émetteur-récepteur (120) comprend un guide d'onde d'émission (121) et un guide d'onde de réception (122) agencés le long de la première direction (A), et une distance entre le guide d'onde d'émission (121) et le guide d'onde de réception (122) est inférieure à 2 µm,
et/ou
dans lequel la première surface de réflexion (1211) du guide d'onde d'émission (121) et la seconde surface de réflexion (1221) du guide d'onde de réception (122) appartenant à un même ensemble émetteur-récepteur (120) sont alignées selon la première direction (A).

11. Module émetteur-récepteur (100) selon la revendication 8, dans lequel une structure évasée (123) est formée sur une extrémité d'entrée du guide d'onde de réception (122) ;
et/ou dans lequel :
le substrat (110) est situé sur le côté de sortie de lumière du faisceau de détection, un angle inclus entre la première surface de réflexion (1211) et une première surface du substrat (110) est de 30° à 60°, et un angle inclus entre la seconde surface de réflexion (1221) et la première surface (112) est de 30° à 60°, ou
le substrat (110) est situé sur un côté opposé au côté de sortie de lumière du faisceau de détection, un angle inclus entre la première surface de réflexion (1211) et la première surface (112) est de 120° à 150°, et un angle inclus entre la seconde surface de réflexion (1221) et la première surface (112) est de 120° à 150°.

12. Module émetteur-récepteur (100) selon la revendication 8, dans lequel la première surface de réflexion (1211) et la seconde surface de réflexion (1221) sont toutes deux revêtues d'un film à haute réflectivité ; et
le nombre d'ensembles émetteur-récepteur (120) est supérieur ou égal à 2.

13. LiDAR, comprenant :
un module d'émission (200), configuré pour émettre un faisceau de détection ;
un module émetteur-récepteur (100) selon la revendication 1 ;
un module de balayage (400), configuré pour dévier le faisceau de détection entré dans le module émetteur-récepteur (100) et dirigé par le module émetteur-récepteur (100) vers le module de balayage (400), et pour diriger le faisceau de détection vers l'extérieur pour la détection ; et
un module de réception (600), le module de balayage (400) étant en outre configuré pour recevoir le faisceau d'écho, dévier le faisceau d'écho et diriger le faisceau d'écho vers le module émetteur-récepteur (100), et le module de réception (600) étant configuré pour recevoir le faisceau d'écho provenant du module émetteur-récepteur (100).
